# EUROPEAN PATENT APPLICATION

(11) **EP 4 800 436 A1**
(43) Date of publication of application: **02.09.2026**
(21) Application number: 25160770.1
(22) Date of filing: 27.02.2025
(51) Int. Cl.: G01T 1/04

(54) **A SYSTEM FOR MONITORING A RADIOTHERAPY DOSE**

(71) Applicant: Brachydose, UAB, 44489 Kaunas (LT)
(72) Inventor: Seperiene, Neringa, Kaunas (LT); Seperys, Rimas, Kaunas (LT)
(74) Representative: AAA Law

(57) **Abstract**

The present disclosure provides sensor units that can be used to measure the actual radiation dose during brachytherapy or external radiation, as well as a reading device for the sensor units. In particular, a sensor unit comprises a hollow tubular body and a polymer hydrogel filling. The hollow tubular body of the sensor unit may have a circular cross-section shape or a rectangular cross-section shape. Depending on the shape of the sensor unit, various uses of the sensor unit to measure radiation dose inside or outside the body are possible.

## Description

### TECHNICAL FIELD

The invention relates to a dosimetry system for measuring and analyzing radiation dose in HDR brachytherapy and external beam radiotherapy procedures, in particular, a polymer hydrogel-based sensor unit adapted to be used during irradiation and a respective reading device.

### BACKGROUND ART

Since the development of radiation therapy, patients have been exposed to radiation for the treatment of cancer cases. The ionizing radiation beam of sufficient energy (radiation sources typically include gamma and beta emitters such as ⁶⁰Co, ¹⁹²Ir, ³²P, ⁹⁰Sr/Y or ¹²⁵I) and dose is used to kill cancerous cells, but it also damages the surrounding healthy tissue. Correctly measured and delivered dose is therefore crucial to the process of assuring the accuracy of the treatment plan.

Brachytherapy is an internal radiation therapy used for cancer treatment. Seeds, pallets, wires, capsules or catheter that contain the radioactive material are placed inside a body, near the cancerous tumour (intracavity brachytherapy) or inside the tumour (interstitial brachytherapy) before the procedure. In case of Low-dose rate (LDR) brachytherapy implant with radiation source stays in the body for one to seven days and continuously releases low doses of radiation. High-dose rate (HDR) brachytherapy involves applying of a high dose of radiation to the tumour while minimising dose to the nearby healthy tissue - the radiation source is delivered via the placed catheters and remains in the body for a short period of time (e.g. 10 to 20 minutes) and is removed after the procedure. The HDR treatment may take place twice a day for two to five days or once a week for two to five weeks.

Model-based dose calculation algorithms that use Monte Carlo codes are often used to determine the dose distribution around the radiation source. However, currently used algorithms are not 100% accurate, therefore quite often a patient receives lower or higher dose than anticipated, or the radiation damages healthy tissues. Dose inaccuracies might cause various side-effects which also result in longer hospitalization and demands additional care from a doctor.

Experimental methods, including radiation dose measurements in ionization chambers, various radiation detectors in solid/liquid tissue-mimicking models/phantoms, have been typically used as outside-body methods with a purpose to test the accuracy of the calculated radiation dose. One of the examples is outside-body polymer gel dosimeters that are hydrogels with dissolved monomers. The hydrogel is poured into an open-end 0.1-1 litre cylindrical glass container, such as, e.g. a beaker. Upon external irradiation of the container, free radicals induce the polymerization of the monomers, so monomers are converted to polymers and optical density of the hydrogel is increased. The amount of polymer produced is a function of the absorbed dose. The change of optical density is measured by scanning the cylindrical container or by photography (in this case, specific dose values are assigned to pixels). However, these methods are not accurate as a thick layer of hydrogel has to be measured, moreover, the glass walls reflect the light and are curved, which further affect the accuracy of measurement. As a result, such a method cannot be efficiently used in a hospital. Additionally, it is not convenient operating large open-end glass containers, and the method requires using large volumes of polymer gel that is costly.

In vivo dosimetry is another way to monitor and detect accidental over- and underexposure resulting from undetected errors arising due to various factors. Thermoluminescent dosimeters (TLDs), metal oxide semiconductor field effect transistors (MOSFETs), Optically stimulated luminescent dosimeters (OSL), fiber-optic scintillation-based detectors are devices that can be used for in vivo dosimetry for brachytherapy. These kinds of dosimeters can be inserted into the catheters and needles used during brachytherapy; however, a separate specialist is typically needed to safely insert the dosimeters, due to very specific requirements for handling such kinds of materials. The dosimeters presently used in in vivo and in vitro dosimetry are multiple time used, complicated to clean and sterilise, they cannot be considered equivalent to human tissue; moreover, they have limitations such as, geometry which doesn't fit well with applicators, tubes and needles; absorbed-dose energy dependence, accumulated-dose and angular dependence, which leads to extensive characterization to reduce uncertainties associated with the detector's performance, or time between irradiation and measurement is important, as after some period of time or storage conditions it is not possible anymore to accurately measure the spatial dose information, thus leading to actual dose measurement inaccuracies. Certain currently used dosimeters need to be additionally connected to wires during the irradiation. Sensors connected by wires to computers or data analysing devices usually make additional electromagnetic field which interfere with other medical devices in hospital.

Therefore, although there are certain dosimeters that are currently used, their use does not fully address the need of making sure that the dose received is accurate and targeted only to the specific damaged area. Moreover, handling the presently available dosimeters requires specific qualification of the user/operator.

### SUMMARY OF THE INVENTION

The present invention relates to sensor units/dosimeters that can be used to measure the actual radiation dose during brachytherapy or external radiation, as well as a reading device for the sensor units. Due to the presently provided shapes and forms of the sensor unit body, it is possible to use the sensor units inside or on the body, close to the tissue being irradiated, thus allowing accurate measurement of the actual radiation dose received by a tissue and/or organs. A polymer gel composition of the sensor unit as provided by the present disclosure is human tissue-equivalent in terms of ionizing radiation absorption properties. Additionally, as the polymer changes due to irradiation are stable and do not change with time, it is possible to accurately evaluate radiation dose from the sensor unit even when some time has passed after the irradiation event.

### Accordingly, the present invention provides the following:

In a first aspect, a sensor unit for measuring radiation dose in or near a target region of a biological subject that is irradiated, comprising a hollow tubular body and a polymer hydrogel filling, wherein the polymer hydrogel filling is enclosed in the hollow tubular body, is provided.

In a preferred embodiment, said sensor unit comprises the hollow tubular body that is a closed structure, enclosing the polymer hydrogel filling.

In a preferred embodiment, said sensor unit comprises the hollow tubular body that has a circular cross-section.

Preferably, said sensor unit further comprises end plugs.

In some embodiments, said end plugs are detectable by ultrasound.

Preferably, said the end plugs are made of a material comprising graphite.

In some preferred embodiments, the length of said end plugs is from 1 mm to 50 mm, preferably 10 mm.

In a preferred embodiment, the length of said sensor unit is from 10 mm to 3000 mm, preferably from 100 mm to 550 mm.

In a preferred embodiment, the outer diameter of said sensor unit is from 0.8 mm to 1.4 mm.

In some embodiments, the sensor unit is configured to be used in a brachytherapy catheter or brachytherapy needle.

In another preferred embodiment, the sensor unit comprises the hollow tubular body that has a rectangular cross section.

In some embodiments, the said hollow body is in a shape of a plate, preferably wherein width of the tubular body greater than thickness of the tubular body.

Preferably, said hollow body comprises a top wall, a bottom wall, a front wall, a rear wall and two opposite side walls. In preferred embodiment, the length of the hollow tubular body is from 50 mm to 150 mm, preferably 110 mm. In further preferred embodiment, the width of the hollow tubular body is from 50 mm to 150 mm, preferably 110 mm. In yet further preferred embodiment, the cross-section size of the hollow tubular body is from 2.5 mm to 50 mm, preferably from 5 mm to 10 mm.

In a preferred embodiment of the invention, at least a portion of the hollow tubular body the sensor unit is made of a UV and visible light transparent material.

In some embodiments, where the hollow tubular body comprises a top wall and a bottom wall, at least a portion of each of said top and said bottom wall is made of a UV and visible light transparent material.

In a preferred embodiment, the transparent material of the hollow tubular body is selected from polyethylene, nylon, vinyl, polyurethane, silicone, acrylic, polyvinylchloride, ethylene-vinyl acetate, polypropylene, and a polyethylene/polyvinylchloride combination.

Preferably, the transparent material of the hollow tubular body is polyethylene.

In a preferred embodiment of the invention, the sensor unit comprise the polymer hydrogel that comprises a water-soluble polymerizable compound, a gelating component and water, wherein the polymerizable compound is polymerizable when exposed to radiation; preferably wherein the polymer hydrogel density is from 0.1 to 1.6 g/cm³.

**In** a preferred embodiment, the polymerizable compound is selected from methacrylic acid, acrylamide, N-vinylpyrrolidone, methacrylamide, hydroxyethyl methacrylate, N,N-dimethyl(meth)acrylamide, N,N-diethyl(meth)acrylamide, 4-(meth)acryloylmorpholine, and N-vinylacetamide.

Preferably, the polymerizable compound is selected from methacrylic acid, acrylamide, and N-vinylpyrrolidone. More preferably, the polymerizable compound is methacrylic acid.

**In** a preferred embodiment, the polymerizable compound is at concentration from 2% to 10% (w/w). More preferably, the polymerizable compound is at concentration from 6% to 8% (w/w).

**In** a preferred embodiment, the gelating component is selected from gelatin, agar agar, chitosan, pectin, alginate, starch, cellulose, collagen, hyaluronic acid.

Preferably, the gelating component is gelatin.

**In** a preferred embodiment the gelating component is at concentration from 2% (w/w) to 10% (w/w). More preferably, the gelating component is at concentration from 4% to 8% (w/w).

**In** a preferred embodiment, the polymer hydrogel further comprises an oxygen scavenger compound component.

**In** a preferred embodiment, the oxygen scavenger compound is selected from Tetrakis(hydroxymethyl)phosphonium chloride (THPS), Poly(hydroquinone) (PHQ), hydroquinone (HQ).

Preferably, the oxygen scavenger compound is Tetrakis(hydroxymethyl)phosphonium chloride (THPS).

**In** a preferred embodiment, the oxygen scavenger compound is provided at concentration from 2 mM to 150 mM.

**In** a second aspect, a polymer hydrogel suitable for radiation dosimetry is provided, comprising: a) a water-soluble polymerizable compound selected from methacrylic acid, acrylamide, and N-vinylpyrrolidone, b) a gelating component selected from gelatin, agar agar, chitosan, pectin, alginate, starch, cellulose, collagen, hyaluronic acid, and c) water, wherein the polymerizable compound is polymerizable when exposed to radiation; preferably wherein the polymer hydrogel density is from 0.1 to 1.6 g/cm³.

In a preferred embodiment, the water-soluble polymerizable compound is methacrylic acid.

In a preferred embodiment, the methacrylic acid is provided at concentration from 2% to 10% (w/w), preferably from 6% to 8% (w/w), more preferably at concentration of 6% or 8% (w/w).

In a preferred embodiment, the gelating component is gelatin.

In a preferred embodiment, gelatin is provided at concentration from 2% (w/w) to 10% (w/w), preferably from 4% to 8% (w/w), more preferably at concentration of 4% or 8% (w/w).

In a preferred embodiment, the polymer hydrogel further comprises an oxygen scavenger compound component.

In a preferred embodiment, the oxygen scavenger compound is selected from Tetrakis(hydroxymethyl)phosphonium chloride (THPS), Poly(hydroquinone) (PHQ), hydroquinone (HQ).

In a preferred embodiment, the oxygen scavenger compound is Tetrakis(hydroxymethyl)phosphonium chloride (THPS).

In a preferred embodiment, the oxygen scavenger compound is provided at concentration from 2 mM to 150 mM, preferably at concentration from 20 mM to 150 mM, more preferably from 100 mM to 150 mM.

In a third aspect, use of the sensor unit of the present invention for measuring a radiation dose is provided.

In a fourth aspect, a reading device configured for scanning the sensor unit of the present invention is provided.

In a preferred embodiment, the reading device comprises a casing comprising 1) a scanning chamber for receiving the sensor unit, 2) a detector configured to detect the optical density of the sensor unit in the scanning chamber, and 3) an optical system comprising a light source, wherein the optical system is configured to provide the light to the detector.

In a preferred embodiment, the detector and the optical system are configured to move together along the length of the sensor unit when sensor unit is inserted in the scanning chamber.

In a preferred embodiment, the reading device further comprises a controller configured to control the sensor unit reading process and, optionally, to transmit the received data to an interpretation program.

In a fifth aspect, a system, comprising the sensor unit according to the present invention and the reading device configured for scanning the sensor unit, is provided.

In a preferred embodiment, the system further comprises an information output device configured to visualize the reading device's data.

In a sixth aspect, a method for measuring a radiation dose is provided, said method comprising positioning the sensor unit of the present invention at a distance of 0.01 cm to 3 cm from a target to be irradiated, performing irradiation by providing a radiation source, detecting optical density of the sensor unit after irradiation, and calculating the radiation dose.

In a preferred embodiment, the distance of the sensor unit from the target to be irradiated is from 1 cm to 1.5 cm.

### BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:
Fig. 1 A-D shows examples of the sensor units according to one or more embodiments of the present invention, wherein the sensor unit has a circular tubular hollow body. A - schematic view of the sensor unit (2); B - top: side view of the sensor unit, bottom: circular cross-section view of the sensor unit, wherein the measurements of hollow tubular body are provided; C - a picture of prepared sensor unit (2); D - a photo of flexible sensor units.

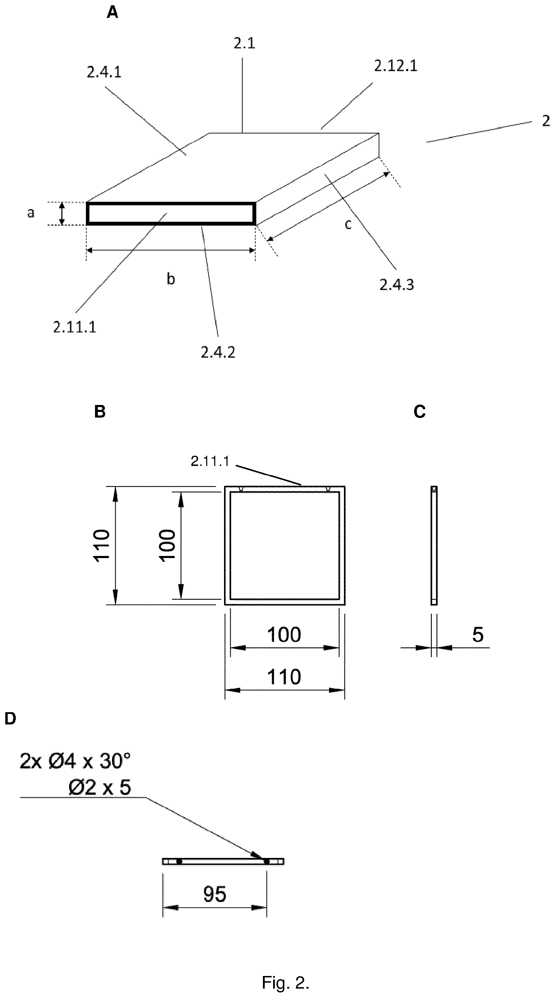

Fig. 2 shows an example of the sensor unit (2) according to one or more embodiments of the present invention wherein the sensor unit has a rectangular cross-section tubular hollow body. A - a perspective view of the body, where "a" is thickness of the body, "b" is width of the body, "c" is length of the body, "b" and "c" may be different or equal in size; the bottom (2.4.2) and rear (2.12.1) walls are marked but are not seen in the presentation of the body; B - view from a larger planar surface (exemplary measurements in mm are provided); the front wall (2.11.1) has two funnel-shaped openings, C - view from a side (exemplary measurements in mm are provided), D - an embodiment of the sensor unit, where the view of the front wall (2.11.1) with the 2 openings (black dots) is provided; the measurements of funnel shape of the openings are provided, where the top of the funnel has diameter of 4 mm, and the botton of the funnel is 2 mm.
Fig. 3 shows an example of the reading device (3) of the system according to the invention.

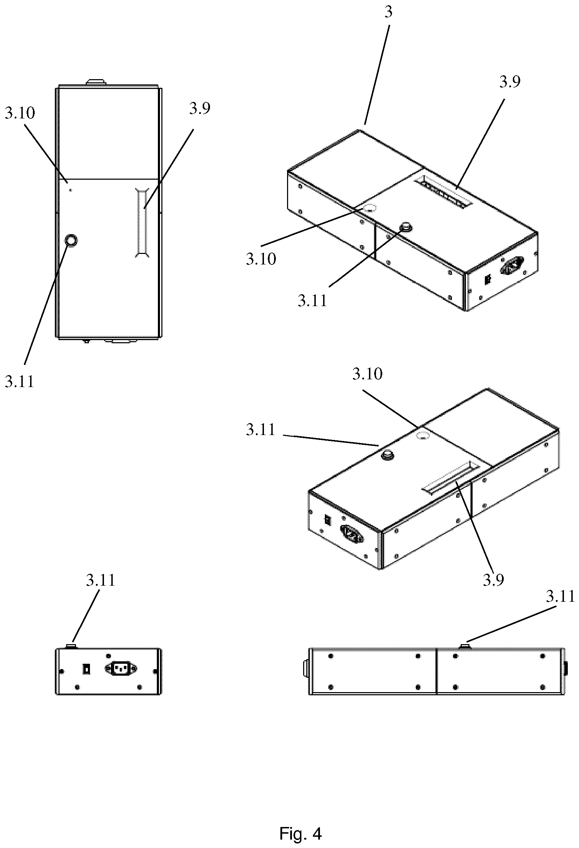

Fig. 4 Example of a reading device (3) according to the present invention. The rectangular space (3.9) is for plate shape sensor unit scanning. The round shaped space (3.10) is for tube shape sensor unit insertion and scanning. The sensor unit is inserted through a hole inside the device, it is scanned and pushed back through hole. The plate form sensor unit as well is placed inside, the scanning module goes through the length of it and retrieves the data. Scanning module could scan the plate form sensor unit from one side, two sides also form U shape form of scanning elements. The button (3.11) is for "reset", on/off button is in the back side near power cable. In the other side there is a connection to computer. The dimensions of the planar top surface of the reading device are preferably 15 cm × 40 cm.
Fig. 5 is a diagram of the data "path" from the detector scan to placement in the hospital database.
Fig. 6 shows comparison of dose sensitivity of nMAG (normoxic methacrylic acid based hydrogel) dose gel to different irradiation beams. Comparison of dose UV-VIS (ultraviolet and visible light) sensitivity of nMAG gel irradiated by high energy X-rays, gamma photons, protons and electron beams.
Fig. 7 shows methacrylic acid concentration dependent gel sensitivity curves. Absorbance values were red out at the wavelength of 650 nm.
Fig. 8 shows dose dependent light absorbance values of irradiated dose gels containing various THPC concentrations (registered at λ=650 nm).
Fig. 9 shows dose dependent UV-VIS light absorbance values of irradiated nMAG dose gels containing various gelatin concentrations
Fig. 10 calibration curve of scanner created to retrieve data from sensor units.
Fig. 11. Schematic outline of gel filled rectangular sensor units prepared for irradiation.
Fig. 12. The neutron generator spectrum at irradiation position.
Fig. 13. Energy distribution in the experimental channels of Pu(Be) neutron unit.
Fig. 14. Dose profile curves from the intensity measurements of dose gels irradiated to different doses from the interval between 0 and 5 Gy. Within the measurement window (12-36 mm) the 6 curves from top to bottom correspond to 5, 4, 3, 2, 1, 0 Gy, accordingly.
Fig. 15. The response curve of the scanner.

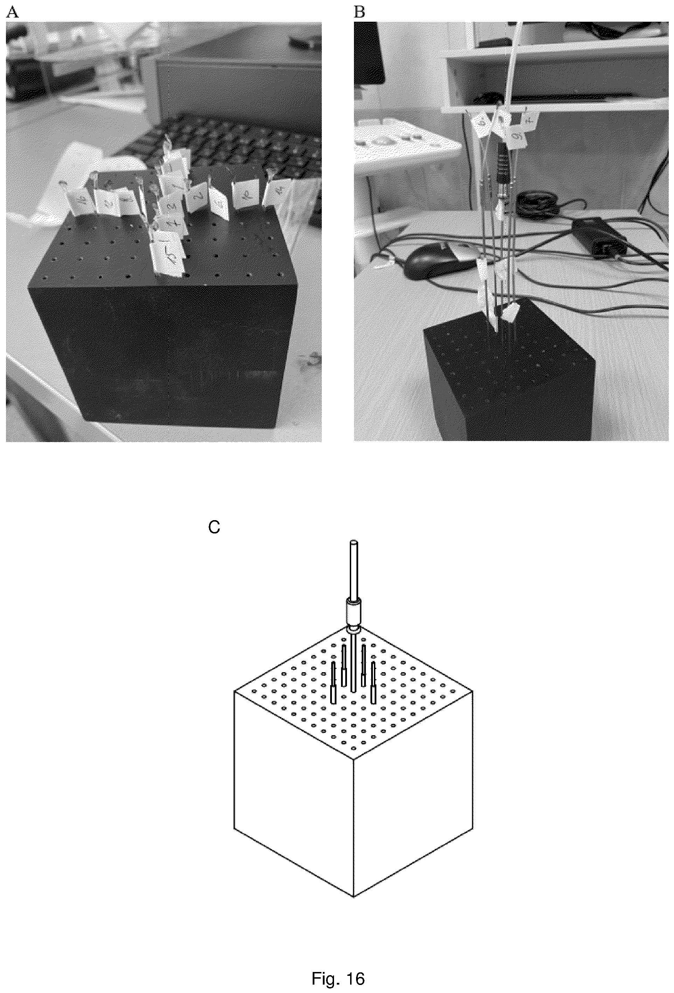

Fig. 16 shows an experimental set in the hospital, when an equivalent of human tissue, made of PLA was used. The cube in a picture is human tissue equivalent materials imitating soft tissues as prostate, skin, breast. Its radiation absorbance properties are similar to human tissue. Multiple sensor units (2) are marked and placed into titanium needles which are used for HDR brachytherapy. The radiation source for treatment enters the "human organ imitation" through white tube connected to metal needed with black plastic joint. According to this, treatment was planned and radiation sources placed. 4 sensor units measured radiation dose of 5 Gy 1 cm away from radiation source. The area 1 cm away is considered to be healthy tissue which must be saved from radiation. A - sensor units irradiation setting without any applicator. B - sensor units irradiation setting with Ti needles used for HDR brachytherapy. The distance between the holes in the cube is 1 cm, C - schematic view of the sensor units irradiation setting with Ti needles used for HDR brachytherapy; the central tube is the tube through which the radiation source enters the "human organ imitation" cube, surrounding tubes correspond to Ti needles with the sensor units inserted inside of the needles.

Preferred embodiments of the invention will be described herein below with reference to the drawings. Each figure contains the same numbering for the same or equivalent element.

### DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment as these will be readily apparent to the skilled person. Furthermore, this description should not be considered to be constraining the invention to given embodiment examples but only as one of possible implementations of the invention.

The sensor unit, as provided herein, can be used both in in-vivo dosimetry, which includes measurement or determination of the radiation dose inside the patient (this can be performed invasively, i.e., inside the patient, as in case of the sensor unit of tubular form with circular cross-section, or non-invasively, i.e., on or some distance from the patient, as, for example, in case of the sensor unit of rectangular form), and in in-vitro dosimetry, for example, in in-phantom dosimetry, which includes a determination of the dose inside a phantom, when the calculated radiation doses are tested on phantom, mimicking tissues and organs that would undergo radiation.

The general purpose is to prevent treatment errors by guiding a medical doctor with real time measured patient data and decision support system. For this purpose, radiation sensor unit as provided herein is used, as well as a reading device. The results obtained from the reading device can then be analyzed by a dedicated decision support algorithm. For example, in case of intracavity or interstitial brachytherapy, sensor units are placed into implantable tubes a few minutes before the radiotherapy procedure, and stay there for all irradiation period, which typically takes 5 to 10 min. In case of skin or surface mold brachytherapy, sensor units are placed outside of the body, but still next to the surface to be irradiated. After irradiation sensor units are pulled out/removed and scanned by the reading device to determine the optical density of the polymer hydrogel. The measured optical density change (compared with a control polymer hydrogel that has not undergone irradiation) is converted into an appropriate radiation dose. The determined radiation dose data is shown immediately at doctor's computer screen near treatment plan and performed treatment data. Three data sets can be seen on screen: treatment plan made before treatment, performed treatment and dose values calculated by system from the real time measured doses of the patient by use of the sensor units. Sensor units provide accurate radiation dose received by patient organ (skin, prostate etc.) at specific places (1-5 points in body) selected by the doctor. The software decision support system may have the clinical trials and clinical research data inside its database. It also takes into account the sensor units measured doses and provided the possible outcome of the treatment. Algorithm calculates if the radiation injuries and other side effects are possible. It takes into account the bleedings, wounds, other burnings, healthy organs damage due to inaccurate radiation or overdose/underdose.

### Sensor unit

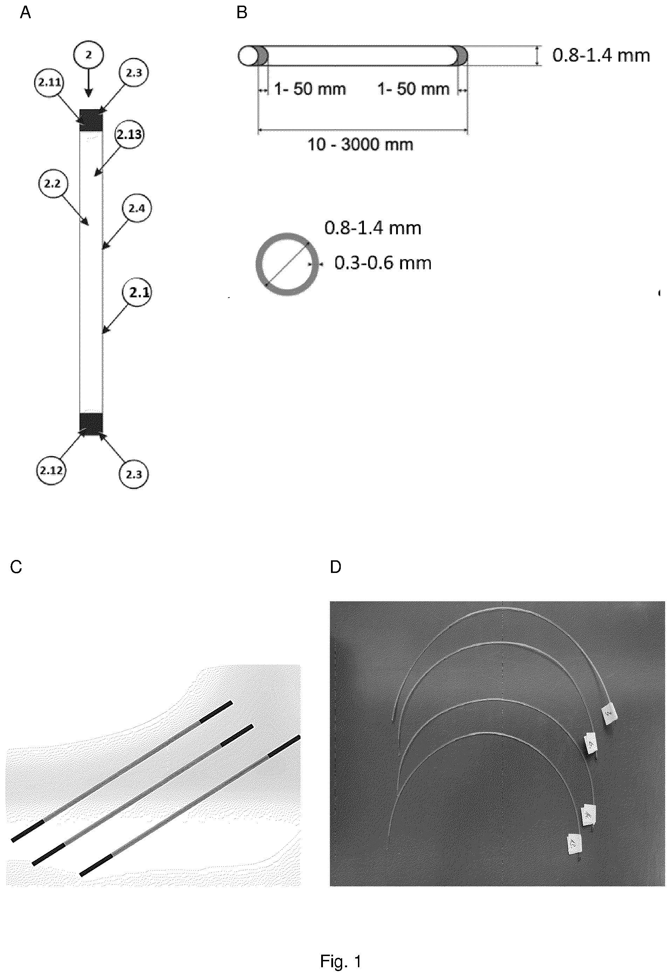

As provided herein, "sensor unit", "sensor", "dosimeter" are used as synonyms. A sensor unit according to one or more embodiments of the invention as provided by the present disclosure, comprises a hollow tubular body and a polymer hydrogel filling. Preferably, the sensor unit (2) does not comprise any electronic elements or wires. In some embodiments, the hollow tubular body (2.1) of the sensor unit has a circular cross-section (for example, it can be in a form of an elongated circular cross-section shape, such as, e.g. provided in Fig. 1). In other embodiments, the hollow tubular body has a rectangular cross-section (for example, it can be in a form of a plate shape, such as, e.g. provided in Fig. 2). In yet other embodiments, the hollow tubular body has any other geometric shape suitable for a tubular shaped body to enclose a space for polymer hydrogel filling. Preferably, the hollow body of the sensor unit forms a closed structure where the polymer hydrogel filling is enclosed inside. A closed system is advantageous, as leakage or evaporation of polymer hydrogel is avoided and air cannot access the polymer hydrogel, as well as a closed structure of the sensor unit allows easy handling and safe transportation and storage of the sensor unit (before, during and after use). In some embodiments, the sensor unit (2) comprises a hollow tubular body (2.1), a polymer hydrogel filling (2.2), and end plugs (2.3). In some embodiments, the sensor unit comprises a hollow tubular body, a polymer hydrogel filling, and has one or more openings at the ends or walls of such body.

In an embodiment of the invention, the hollow tubular body (2.1) of the sensor unit (2) has a circular cross-section. The Hollow tubular body (2.1) has a first end (2.11) and a second end (2.12) and a cavity (2.13) disposed between the first and second ends (2.11, 2.12) and wall (2.4) of the hollow tubular body (2.1). The wall (2.4) is such that allows passing of the radiation energy into the polymer hydrogel filling (2.2) essentially unimpeded and allows later on reading of the polymer hydrogel filling (2.2) by a reading device (3). The hollow tubular body (2.1) is biocompatible with human organ tissues. Biocompatibility is defined by such properties: non-toxic for human organs, does not cause skin irritation in normal conditions, does not cause inflammation, other skin and organs damage. The circular cross-section of the hollow tubular body (2.1) is preferred for facilitating use/insertion into a biological subject, e.g. human body, for penetrating up to the target area of a targeted radiotherapy without any additional tissue penetrating means or using a hollow needle or alike means as tissue penetrating means. If a needle or alike means as tissue penetrating means are used, the sensor unit (2) is inserted into the cavity of the needle or alike means as tissue penetrating means, and as a result both are disposed at the target area of a targeted radiotherapy. Preferably, a needle (for example, a titanium needle) or alike means (for example, a catheter) is inserted or otherwise disposed at the target area before inserting the sensor unit. Alternatively, the sensor unit with a circular cross-section shape tubular body can be used on/outside a body, for example, in surface mold brachytherapy. The sensor unit can be used to detect radiation doses from a radiation source used to irradiate a tissue to be treated in the course of an HDR brachytherapy treatment, for example intracavity or interstitial brachytherapy.

At least a portion of the hollow tubular body is made of a UV and visible light transparent material. For the purposes of the present disclosure, if Transmittance coefficient of a material is in the range from 60% to 100% (evaluated by standard UV-VIS spectrometer, for example, Ocean Optics USB4000), the material is considered transparent. Material such as polyethylene (PE), nylon, vinyl, polyurethane, silicone, acrylic, polyvinylchloride (PVC), ethylene-vinyl acetate (EVA), polypropylene, PE/PVC combination can be used, preferably material is polyethylene. In preferred embodiments, when the sensor unit comprises a hollow tubular body with a circular cross-section, the material is flexible, so that the sensor unit is insertable and movable through a catheter as needed. In some embodiments, where the sensor unit is insertable and movable through a means that is not flexible or is straight (in case of, for example, a titanium needle) or where the sensor unit is used without a means for insertion, the material of the tubular body part may be flexible or non-flexible. In some embodiments, the sensor unit comprising a flexible hollow tubular body is used on or outside the body, for example, shaped, due to the flexibility, into externally accessible cavities of the body (e.g. into an auricle of an ear). The polymer hydrogel filling (2.2) comprises a polymer hydrogel, suitable for filling the cavity (2.13) of the hollow tubular body (2.1) and application for radiotherapy as radiation energy registering polymer. The whole volume of the cavity (2.13) is filled evenly with the polymer hydrogel filling (2.2) without any oxygen or other gas pockets. Preferably, polymer hydrogel is sensitive to all types of ionising radiation used in medical field such as, protons, neutrons, X-ray, gamma rays, positrons, electrons, any external beam created by linear accelerator, natural sources of radioactive materials used for treatment as iodine any isotope, iridium any isotope. The polymer hydrogel is such that is compatible with the hollow tubular body (2.1) material - moisture can dissipate from the polymer hydrogel filling (2.2).

The sensor unit comprising a circular cross-section shape hollow tubular body may further comprise end plugs. The end plugs (2.3) are dimensioned for inserting into the cavity (2.13) of the hollow tubular body (2.1) at the first end (2.11) and at the second end (2.12) for closing the ends (2.11, 2.12) and retaining the polymer hydrogel filling (2.2) in the cavity (2.13) (see, e.g. Fig. 1B). The radius of the plugs (2.3) is such that there would be no free space between surface of the plugs (2.3) and the wall (2.4) of the cavity (2.13), would not increase the diameter of the ends (2.11, 2.12) and could not be relocated while the sensor unit (2) is in use within a needle or alike means as tissue penetrating means or without any such additional tissue penetrating means. Material of the plugs (2.3) may be suitable for monitoring using an ultrasound. The plugs (2.3) material is preferably graphite or a polymer fineline lead. The purpose of ultrasound detectable plugs is to allow monitoring positioning of the sensor unit (2) at the target radiation application area for precise positioning.

In some embodiments, the sensor unit comprising a circular cross-section shape hollow tubular body may be without end plugs or may be provided as a body with closed ends. As an example, the length of the sensor unit comprising a circular cross-section shape hollow tubular body may be from 10 mm to 3000 mm, preferably from 100 mm to 550 mm; for example, 150 mm, 200 mm, 250 mm, 300 mm, 350 mm, 400 mm, 450 mm, 500 mm. In some embodiments the length of the sensor unit is from 200 mm to 300 mm. As an example, the outer diameter of the hollow tubular body (2.1) is 0.8-1.4 mm, preferably 0.9 mm, and thickness of the body wall is 0.3-0.6 mm, preferably 0.4-0.5 mm. Where the end plugs are used, the end plugs' (2.3) outer diameter is 0.3-0.9 mm, preferably 0.35-0.7 mm. The length of the plugs is preferably 1-50 mm, preferably 10 mm. The listed measurements may have a variation of ± 0.05 mm.

In other preferred embodiment, the sensor unit (2) comprises a hollow tubular body with a rectangular cross-section. The rectangular cross-section shape can be such as forming a square (for example, where the width and length of the body are equal) or essentially forming a plate having width of the tubular body greater than thickness of the tubular body (for example, as provided in Fig. 2A). The polymer hydrogel filling is inside of the hollow tubular body. A hollow tubular body (2.1) of a rectangular shape of the sensor unit has a top wall (2.4.1), a bottom wall (2.4.2), opposed front (2.11.1) and rear (2.12.1) end walls and opposed side walls (2.4.3); cross section is of rectangular shape (for example, as provided in Fig. 2A). Essentially, such a sensor unit has a hollow body that has a shape of a plate, where the top wall (2.4.1) of the plate is square or rectangular. At least part, preferably centre section, of the top and bottom wall is made of a UV and visible light transparent material. Material such as polyethylene (PE), nylon, vinyl, polyurethane, silicone, acrylic, polyvinylchloride (PVC), ethylene-vinyl acetate (EVA), polypropylene, PE/PVC combination can be used, preferably material is polyethylene. Front, rear and/or side walls may be made of a different material than the front and rear wall, for example, they can be made of polylactic acid (PLA). Preferably, front, rear and side walls are made of a different material than the top and bottom wall, thus making a rectangular frame between the top and bottom walls (see, e.g. Fig. 2B). At least one of the front, rear or side wall contains an opening. Preferably, two openings are present. For example, two openings are present in the front wall (see, e.g. Fig. 2B). The one or more openings are useful for filling the hollow tubular body of the sensor unit with polymer hydrogel. Once the hollow tubular body is filled with the polymer hydrogel, without leaving air inside, the one or more openings are sealed with liquid plastic (for example, cyanoacrylate, epoxy, PVA, xylene and n-butyl acetate, methyl-ethyl-ketone and ethyl acetate), thus forming the sensor unit.

As an example, the length of the sensor unit comprising a rectangular cross-section hollow tubular body is from 50 mm to 150 mm, preferably 110 mm, the width of the sensor unit is from 50 mm to 150 mm, preferably 110 mm, and the thickness of each of the top or bottom wall is 1-5 mm, preferably 1 mm. The cross-section size (thickness) of the sensor unit can vary from 2.5 mm to 50 mm, and preferably is 5 mm or 10 mm. The thickness of the frame determines the thickness/cross-section size of the polymer hydrogel filling. The inside part/area of the top and bottom wall is transparent, and its width can vary from 10 mm to 1000 mm, preferably the width is 100 mm. The listed measurements may have a variation of ± 0.05 mm. The frame may contain 2 openings, for example, in the front wall section of the frame. The size of the openings can be as provided in Fig. 2D, for example, the openings may be funnel shaped. The top of the funnel-shaped opening may have a diameter of 4 mm, and the bottom of the funnel-shaped opening may have a diameter of 2 mm.

The sensor unit that has a rectangular tubular hollow body as described above, can be used to detect actual radiation doses from a radiation source used to irradiate surface area of a tissue, for example, skin.

The sensor unit (2) according to the present invention is a disposable unit for placing near a cancer tumour or at a specific organ before the radiotherapy procedure. The sensor unit (2) stays there during the procedure and collects patient data in real time. It measures accurate radiation dose applied to specific organs at specific places. The sensor units (2) with a hollow tubular body with a circular cross-section may be used with HDR brachytherapy needles, implantable tubes or catheters. In this case they don't have direct contact with skin and human liquids. Other way to use the sensor units (2) is to place them in bladder, uterus, other organs without standard implantable tubes and needles. In this case the tubular body of the sensor unit (2) and pinned ends (2.11, 2.12), where present, have direct contact with human tissue and liquids.

At least one sensor unit (2) is needed per procedure/irradiation event. Advantageously, due to the form of the sensor units according to the present invention, it is possible to position the sensor unit as close to the radiation source pathway and the tissue being irradiated as possible. The sensor unit may be positioned at a distance of 0.01 cm to 3 cm from a target or a surface to be irradiated. For example, in case of the sensor unit comprising a circular cross-section tubular hollow body, where the sensor unit is used inside body, the sensor unit can be positioned as close as 0.05-1 cm from the tumour/target tissue. For example, in case of the sensor unit comprising a rectangular cross-section tubular hollow body, the sensor unit can also be positioned as close as touching the skin if radiation beam is well positioned and collimated, and the required radiation dose is focused accurately. In other cases, the bolus sheets (for example, made of flexible silicone, polycarbonate, PMMA or other polymers) are placed between human skin and radiation beam as well as sensor unit. They work as spacer helping to focus radiation beam accurately into cancerous tumour. By way of example, bolus sheets may be 1 cm thick. From one to several bolus sheets could be placed on human body, for example, 3 bolus sheets. In other examples, the bolus sheets may be from 1 to 3 cm thick. In case of sensor unit with a rectangular cross-section tubular hollow body, the sensor unit is positioned with its largest planar surface (e.g. in case of the body as shown in Fig. 2A, the surface of top wall (2.4.1) or bottom wall (2.4.2)) would be facing the surface to be irradiated.

In a preferred embodiment, a method for measuring a radiation dose is provided, comprising positioning the sensor unit according to present invention, at a distance of 0.01 cm to 3 cm from a target to be irradiated, performing irradiation by providing a radiation source, detecting optical density of the sensor unit after irradiation, and calculating the radiation dose. The sensor unit may be positioned, for example, at a distance of 0.01 cm, 0.05 cm, 0.1 cm, 0.2 cm, 0.3 cm, 0.4 cm, 0.5 cm, 1 cm, 1.5 cm, 2 cm, 2.5 cm, 3 cm, or at a distance in between. Preferably, the sensor unit is positioned at a distance from 1 to 1.5 cm from the target to be irradiated.

### Polymer hydrogel

The hollow body of the sensor unit according to the present disclosure is filled with a polymer gel filling. As used throughout the description of the present invention, "polymer hydrogel", "polymer gel", "gel" are used as synonyms of the same material, namely as a material for radiation dosimetry that is used in the sensor unit according to the present invention. In particular, the polymer hydrogel as used in the sensor unit according to the invention, comprises a composition that has a high-water content (at least about 70 % (w/w)) and that is capable of being polymerized by exposing it to radiation. Therefore, the term "polymer" when used in the terms "polymer hydrogel" or "polymer gel" means that said hydrogel or gel comprises at least one component capable of polymerization. Various polymer hydrogels can be used in the sensor unit as provided herein, as long as they are capable of being polymerized by exposing it to radiation.

The present disclosure further provides a particular polymer hydrogel suitable for using in the sensor unit of the present invention, wherein the polymer hydrogel comprises at least 3 components: a water-soluble polymerizable compound, a gelating component and water.

As an example, the water-soluble polymerizable compound can be a water-soluble polymerizable monomer and can include methacrylic acid, acrylamide, N-vinylpyrrolidone, methacrylamide, hydroxyethyl methacrylate, N,N-dimethyl(meth)acrylamide, N,N-diethyl(meth)acrylamide, 4-(meth)acryloylmorpholine, and N-vinylacetamide. When the polymerizable monomer is polymerized to a certain extent upon exposure to irradiation, the optical density of the polymer hydrogel is changed and thus the radiation dosage can be determined. The aforementioned water-soluble polymerizable monomers may be used alone or in combination of two or more species. Preferably, methacrylic acid (MAA), acrylamide, and/or N-vinylpyrrolidone is used. More preferably, methacrylic acid is used. Use of methacrylic acid in the sensor unit according to the present invention is advantageous as it allows high sensitivity (as low as, for example, 0.1 Gy) even in case of lower irradiation doses such as 0.2 Gy, 2 Gy, 5 Gy, 10 Gy.

The amount of the water-soluble polymerizable monomer is preferably from 2% (w/w) to 10% (w/w), for example 2%, 3%, 4%, 5%, 6%, 7%, 8%, 9%, or 10% (w/w). Preferably, the concentration is from 6% to 8% (w/w). In preferred embodiments, the water-soluble polymerizable monomer is methacrylic acid (MAA) provided at concentrations from 2% to 10% (w/w), more preferably, MAA is provided at concentration of 6% or 8% (w/w). As an example, a gelating component can be selected from gelatin, agar agar, chitosan, pectin, alginate, starch, cellulose, collagen, hyaluronic acid, preferably, the gelating component is gelatin. The amount of the gelating component is preferably from 2% (w/w) to 10% (w/w), for example 2%, 3%, 4%, 5%, 6%, 7%, 8%, 9%, or 10% (w/w). Preferably, the concentration is from 4% to 8% (w/w). In preferred embodiments, the gelating component is gelatin provided at concentrations from 2% to 10% (w/w), more preferably, gelatin is provided at concentration of 4% or 8% (w/w).

The polymer hydrogel may contain additional compounds such as, for example, oxygen scavenger compounds. The oxygen scavenger compounds may be selected from Tetrakis(hydroxymethyl)phosphonium chloride (THPS), Poly(hydroquinone) (PHQ), hydroquinone (HQ). Preferably, Tetrakis(hydroxymethyl)phosphonium chloride (THPS) is used. The amount of the oxygen scavenger compound is preferably from 2 mM up to 150 mM, for example 5 mM, 10 mM, 15 mM, 20 mM, 25 mM, 35 mM, 50 mM, 70 mM, 85 mM, 100 mM, 125 mM, or 150 mM. In some preferred embodiments, the amount of the oxygen scavenger compound is from 20 mM to 150 mM, for example, it may be from 50 mM to 150 mM, or from 100 mM to 150 mM. Preferably, the oxygen scavenger is THPS. Surprisingly, it was determined that such larger amounts of oxygen scavenger could contribute to the enhancement of dose gel sensitivity to irradiation dose/time. Also, the higher concentration of oxygen scavenger prevents the expansion of oxygen infused zone, which is important when high dose gradients are present in irradiated gel.

In preferred embodiments, the polymer hydrogel comprises 6% (w/w) of methacrylic acid, 8% (w/w) of gelatin, and from 10 mM to 150 mM THPC. Preferably, the polymer hydrogel comprises from 100 mM to 150 mM THPC. In other preferred embodiments, the polymer hydrogel comprises 8% (w/w) of methacrylic acid, 4% (w/w) of gelating, and from 15 mM to 150 mM THPC. Preferably, the polymer hydrogel comprises from 100 mM to 150 mM THPC.

The polymer hydrogel may further contain additional compounds such as, e.g. crosslinking agent.

Preferably, the polymer hydrogel as used herein, when prepared from the above-mentioned components, turns into a gelatinous substance after an hour or longer after the components are mixed. This way it is easy to pour the prepared mixture of the components into the hollow tubular body of the sensor unit. The preferred gel densities range from 0.1 to 1.6 g/cm³, preferably, gel density is close to that of a human tissue density: the range from 0.1 to 1.6 g/cm³, most preferred density being 0.24 g/cm³ and 1.1 g/cm³.

It is advantageous to use the polymer hydrogel as disclosed herein as such compositions allow measuring the actual radiation dosage as indicated by the degree of polymerization and thus changed optical density, as the sensor unit comprising such polymer hydrogel remains inert and the dosimetric signal does not change over a period of time. Further, the provided polymer hydrogel sensitive to low dose, high gradient radiation, such as, e.g. 0.5-5 Gy.

### Reading device

After the radiotherapy procedure, the sensor unit (2) is pulled out and scanned to retrieve the data by a reading device. Various reading devices can be suitable for this purpose, for example, CCD, infrared, laser scanner can be used. In one or more embodiments, the sensor unit (2) does not comprise any electronic elements or wires for interfacing with a reading device.

The present disclosure further provides a reading device (3) adapted for the sensor unit (2). After the radiotherapy procedure, the sensor unit (2) is pulled out and scanned to retrieve the data by the reading device (3). During scanning the optical density of the polymer hydrogel is determined. The measured optical density change (compared with a control polymer hydrogel that has not undergone irradiation) is converted into an appropriate radiation dose, based on a calibration curve. For example, the calibration curve is created according to the data in the ionization camera. The radiation dose data may be provided in a form of a table or a chart. If a chart form is used, the X axis may show various distances from one end to the other end of the sensor unit, while the Y axis may show the determined radiation dose at appropriate point of the sensor unit. A total radiation dose may also be calculated and shown. The determined radiation dose data is sent to the doctor's computer, and the warnings are shown if the actual treatment is not aligned with the planned treatment. The planned treatment is done by treatment planning system prior the first radiotherapy procedure.

Further provided is a system (1) that comprises a passive, non-electronic sensor unit (2) and a sensor unit (2) reading device (3), information output devices for visualizing reading device's (3) read data as read from the sensor unit (2). The system (1) also comprises a computer device, comprising at least a processing unit, a memory unit, for receiving data from the reading device (3), forwarding the read data to servers and/or information output devices such as computer screens. The system (1) does not make any impact in making decisions for very first radiotherapy procedure. The collected data after the first procedure is used for second, third, and so on procedures and decision making of the doctor. For example, the collected data after the first procedure is used as reference data against which the second, third and further procedures are compared. This helps to prevent up to 100% of treatment errors appearing in cervical, breast, prostate, head and neck and other solid localized type cancer cases.

The reading device (3) comprises a casing (3.1) comprising a scanning chamber (3.2) for receiving the sensor unit (2), a detector (3.3) such as a spectrometer for detecting the polymer hydrogel (2.2) physical change due to radiation energy, an optical system (3.4) comprising a light source, for example, LED, and a coloration channel where the light source (3.5) is preferably 4000K LED light source and 5 mm in diameter although other dimensions are not excluded. The reading device may further comprise a controller (3.7) such as a microcontroller with firmware and/or a PCB (printed circuit board) plate with input/output connections. The reading device may further comprise an interpretation program (3.8) which takes measured data from scanner (3) (e.g. the controller transmits the received data to the interpretation program) and draws a graph, connects detectors data into uniform data set and visualises the data on screen. At the same time the interpretation program may give signals for controller components or give commands to controlled components. The reading device may further comprise an imaging system/information output device (3.6), such as a computer screen.

There is a very small distance between the sensor unit and the optical system or they are in contact, thus eliminating the influence of the ambient air on the results. Measurement is performed in 1D instead of 3D, thus reducing the number of calculation and analysis algorithms and increasing the measurement speed.

Further a procedure for taking readings of the sensor using the sensor reading device will be described. The sensor unit (2) is placed in the sensor unit (2) reading device (3). The detector (3.3), the optical system (3.4) and the light source (3.5) of the reading device (3) move together along the length of the sensor unit (2). The light from the light source (3.5) enters the optical system (3.4), where formed light rays enter the sensor unit (2) and from it again into the optical system (3.4). The function of the optical system (3.4) is to ensure a desired resolution along the sensor unit (2) and to correct the light beam distortions caused by the geometrical shape of the sensor unit (2). From the optical system (3.4), the light enters the detector (3.3), where the light signal is converted into an electrical signal and sent to the controller (3.7). The controller (3.7) controls the sensor unit (2) reading process according to the installed program (the programme has user interface with functional buttons "Start", "Stop, "Home", "Scan", "Save to File", "Send", "Connect", "Disconnect", "Show"; on screen the graphs representing measurements are shown) and transmits the received data to the interpretation program (3.8). The interpretation program (3.8) analyses the data received from the controller (3.7) and provides the imaging system (3.6) with the dose values along the sensor unit (2) with the desired resolution 0.01mm spatial resolution, dose resolution is 0.1Gy. When the reading device (3) is switched on, it takes 1-2 min to self-calibrate. The scanning of the reference sensor unit (2) placed in the scanning chamber (3.2) is recommended every 10th scanning process. It is needed to get more accurate scanning data. The reading device (3) identifies the sensor unit (2) by its ID number, scans the sensor unit (2), gets the radiation dose values all along the sensor unit (2), and matches the values to the sensor unit's (2) ID number. The ID number is a specific number marked on the sensor unit (2) for tracking the sensor unit (2) path from manufacturing to usage, scanning, and subsequent discarding. The algorithm (OD = - log 10 (T); OD-optical density, T- light transmittance) calculates the optical density changes in the sensor unit (2), compares it to the reference values received during the routine calibration procedure, and calculates the specific doses at specific geometrical points. It saves the values to its inner memory. When the reading device (3) is going to be switched off, it initiates the internal turning off procedure and sends all data collected during the day to the hospital's server/cloud, where all patients' files are stored.

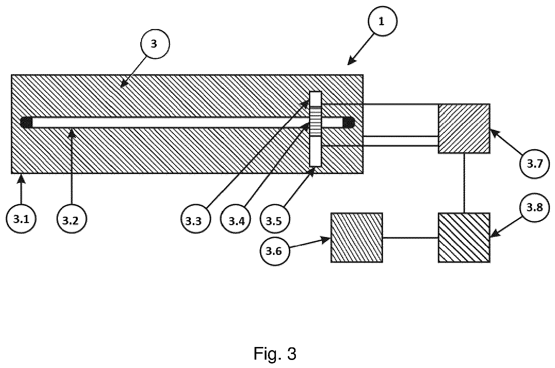

All the data from the sensor unit (2) are shown on the imaging system (3.6) such as a computer monitor, which may be a part of the system (1) according to the invention. Sensor unit's (2) ID, the radiation dose distribution along the length of the sensor unit (2) measured by the sensor unit (2), dangerous and not matching treatment plan dose values are shown on a separate screen, which may be a part of the reading device (3). The system (1) also comprises based treatment outcome prediction software, which calculates and shows the type of the injury, error and probability of its appearance. After the radiotherapy procedure sensor unit (2) is pulled out and scanned using the reader device (3) of the system (1) (Fig. 3). Accurate radiation dose is collected at scanner data base. Accurate radiation dose measured at specific organ during the radiotherapy procedure is taken from the sensor units (2) reading device (3) data base and shown at the same screen with doses planned with treatment planning system. Treatment planning system plans the radiation doses at organs prior the treatment. It creates DICOM file with planned treatment. The software takes the DICOM file and adds accurate measured dose values. Planned and measured doses are shown on a computer monitor. If there is dose which is too high or too low, it's shown as warning. Then the software uses already installed algorithms which are used by doctors to treat patients' injuries when they see overdose or under dose at specific organ. These algorithms are improved every time doctor treats every new patient. Doctors give the input to algorithm by marking injury type, severity, treatment time, methodologies they used to treat injury etc. Machine learning algorithm is trained by adding more and more data to algorithm with accurate outcomes for specific cancer localisation. When the treatment plan is supplemented with DICOM file, the outcome/injury/overdose can be predicted for a treatment plan. When the real outcomes and methods chosen to treat injury ae added to the algorithm, the machine learning algorithm is trained to show most relevant treatment method.

Different polymer hydrogel dosimeter evaluation/visualisation methods can be applied to retrieve dose and evaluate changes after radiation: magnetic resonance imaging (MRI), X-ray CT, optical CT imaging, UV-VIS spectrometry, other optical scanning methods, film dosimetry (to some extent), ultrasound. These methods are available in hospital but are not used in wide extent.

The fastest scanners reported to date use pixelated area detectors to acquire a complete 2D projection in the same time as a traditional laser scanner obtains a 1D projection, leading to dramatically reduced scan times of a few minutes instead of many hours. A cone-beam configuration was proposed by Wolodzko et al (1999) and a similar device is marketed as a research tool by Modus Medical devices Inc. (London, Ontario, Canada) under the name Vista. Work has been published using the Vista system (Bosi et al 2007, 2009a, 2009b). A parallel beam configuration was proposed by Doran et al (2001) and later refined to include telecentric optics to minimize sensitivity to scattered light (Krstajic and Doran 2006, 2007, Sakhalkar and Oldham 2008).

High quality results using both geometries have been obtained using absorbing dosimeters (e.g. PRESAGE^{™} (Doran and Krstajic 2006, Wai et al 2008, Sakhalkar et al 2009) and Fricke gels (Babic and Schreiner 2006). However, the utility of these scanners for imaging polymer gels, where the optical contrast is generated by light scattering, is limited.

At least two ways to scan the rectangular/plate form sensor unit can be used.

Option 1. The sensor unit (2) is placed on the sensor unit positioning system (1). The elements (3.3, 3.4, 3.5) of the scanning system of the sensor unit (2) move above the surface of the sensor unit (2). (3.3) and (3.5) are located on opposite sides of the sensor unit (2). Light from the light source (3.5) enters the optical system (3.4), in which the formed light rays enter the dosimeter, and from it again into the optical system (3.4). The function of the optical system is to ensure the desired scanning resolution of the sensor unit (2) and to correct the distortions of the light rays arising from the mutual movement of the dosimeter (2) and the elements (3.3, 3.4, 3.5) of the scanning system. From the optical system, the light enters the detector (3.3), where the light signal is converted into an electrical signal and sent to the controller (3.7). The controller (3.7) controls the sensor unit scanning process according to the installed program and transmits the received data to the interpretation program (3.8). The interpretation program (3.8) analyzes the data received from the controller (3.7) and provides the imaging system (3.6) with the dose values obtained after measuring the sensor unit area with the desired resolution. There is a very small distance between the sensor unit and the optical system or they are in contact, thus eliminating the influence of ambient air on the results. The measurement is performed in 2D instead of 3D, thus reducing the number of calculation and analysis algorithms and increasing the measurement speed.

Option 2. The sensor unit (2) is placed on the sensor unit positioning system (1). The elements (3.3, 3.4, 3.5) of the sensor unit (2) scanning system move together on the sensor unit surface (2). (3.3) and (3.5) are on the same side of the sensor unit (2). Light from the light source (3.5) enters the optical system (3.4), in which the formed light rays enter the sensor unit, and from it again into the optical system (3.4). The geometry of the scanning system elements (3.3, 3.4, 3.5) is selected so that the rays emerging from the source (3.5) enter the sensor unit and then from the sensor unit enter the detector which is on the same side of the detector as the light source. The function of the optical system is to ensure the desired scanning resolution of the sensor unit (2) and to correct the distortions of the light rays arising from the mutual movement of the sensor unit (2) and the scanning system elements (3.3, 3.4, 3.5). Light from the optical system enters the detector (3.3), in which the light signal is converted into an electrical signal and sent to the controller (3.7). The controller (3.7) controls the scanning process of the sensor unit according to the installed program and transmits the received data to the interpretation program (3.8). The interpretation program (3.8) analyzes the data received from the controller (3.7) and provides the imaging system (3.6) with the dose values obtained after measuring the sensor unit area with the desired resolution. There is a very small distance between the sensor unit and the optical system or they are in contact, thus eliminating the influence of ambient air on the results. The measurement is performed in 2D instead of 3D, thus reducing the number of calculation and analysis algorithms and increasing the measurement speed.

Advantageously, the reading device (3) can be configured to be used with several shapes of sensor unit. For example, a circular cross-section tubular shape and rectangular/plate shape sensor unit information can be measured with a single reading device configured respectively. An exemplary embodiment is provided in Fig. 4. In some embodiments, the reading device may be configured to scan the rectangular cross-section shaped sensor unit from the top wall side, from both, top and bottom wall sides, or, alternatively, it may comprise scanning elements formed in a U shape around the sensor unit to be scanned.

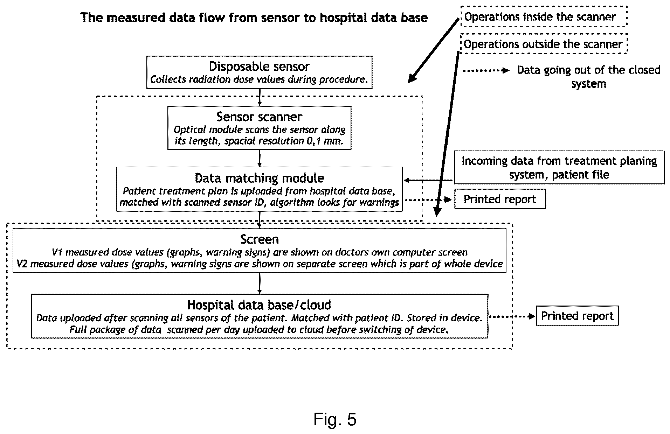

An overall exemplary measured data flow from sensor unit to hospital data base is provided in Fig. 5. In case of Version 1 (V1), data is sent to the hospital's server, the doctor can open the files and see the data on his/her screen. The ID of sensor unit, the radiation dose distribution along the length of sensor unit measured by sensor unit, dangerous and not matching treatment plan dose values are shown on screen. In case of Version 2 (V2), sensor unit's ID, the radiation dose distribution along the length of the sensor unit measured by the sensor unit, dangerous and not matching treatment plan dose values are shown on a separate screen, which is a part of the scanner.
In all cases the collected data are sent to the hospital's database/server/cloud with the identifier, which data belongs to which patient. The patient's treatment plan data is used to show the dangerous radiation doses that were measured by the sensor units. The treatment plan is made prior to the radiotherapy treatment and is stored in the hospital database. The algorithm/software placed inside a scanner detects the patient's ID assigned to the sensor unit, uploads the specific data from the patient's treatment plan, matches the doses planned and doses measured by the sensor unit. The mismatches and warnings and warnings are shown. The scanner has wire connection and could send data wirelessly.

Various examples of the presently described sensor unit and reading device are provided further.

In an embodiment, gel preparation was performed according to the following procedure. The standard gel consisted of: 8 % (w/w) of gelatin from porcine skin (300 bloom, Sigma-Aldrich) was dissolved in 86 % (w/w) of distilled water of high purity (HPLC grade water). When the gelatin was fully inflated by the water, a flask with a gel was heated up to 35°C while stirring (magnetic stirrer Heidolph MR 3001 K). After the gelatin is fully dissolved, 5 % (w/w) of methacrylic acid (MAA, Sigma- Aldrich) was added, followed by addition of 2 mM of tetrakis (hydroxymethyl) phosphonium chloride (THPC, Sigma-Aldrich). The mixture was heated up to 45°C under continuous stirring. Then the heating was stopped, and the prepared gel was left to cool down and settle. The whole process was conducted in a fume hood under atmospheric conditions without using any oxygen purging devices. In order to minimize possible oxidation prepared gel was filled into polyethylene tubes (100 mm, 150 mm, 200mm, 250 mm length, 0.9 mm, 1.2 mm outer diameter, 0.41 mm wall thickness), which were immediately pined by graphite (polymer fineline lead was used) pins and sealed by hearing and pressing the ends of tube by mechanical force. Tubes were kept at room temperature at least for 8 hours and then stored in cool and dark place until irradiation. Various polyethylene tubes were tested - made from UltraHigh Molecular Weight Polyethylene (UHMWPE), High-Density Polyethylene (HDPE), Low-Density Polyethylene (LDPE) or Linear Low-Density Polyethylene (LLDPE). LDPE and LLDPE were preferred.

For irradiation the sensor units underwent irradiation at various conditions:
High energy photons: for irradiation the sensor units by high energy protons (15MeV) the sensor unit was put on adjusted table, the irradiation source was fixed at a 1 m distance to the sensor unit and underwent irradiation from medical linear accelerator Clinac DMX (Varian) apparatus. Irradiation parameters were 2, 4, 6, 8, and 10 Gy. Energy was 15 MeV, and the dose rate was 3 Gy/min. After irradiation session sensor units were stored in cool dark place.
Gamma rays: for irradiation the sensor units by gamma rays the sensor unit was put on adjusted table, the irradiation source was fixed at a distance of 1 m to the sensor unit and underwent irradiation from medical teletherapy unit ROKUS M with 60Co source. Irradiation parameters were 0.5, 2, 4, 6, 8, and 10 Gy. The average energy was 1.25 MeV. After irradiation session sensor units were stored in cool dark place.
Proton: for irradiation the sensor units by protons the sensor unit was put on adjusted table, the irradiation source was fixed at a distance of 1 m to the sensor unit and underwent irradiation from proton accelerator IBA PROTEOS C230 (lon Beam Applications S.A) to doses from the interval 0.5 - 5.0 Gy with a single dose at a time. Energy was 230 MeV. After irradiation session sensor units were stored in cool dark place.
Electron: for irradiation the sensor units by electrons the sensor unit was put on adjusted table, the irradiation source was fixed at a distance of 1 m to the sensor unit and underwent irradiation from medical linear accelerator Varian Clinac 2100C/D. Doses applied were from the interval of 0.5 - 5.0 Gy. Energy was 6 MeV and 16 MeV. After irradiation session sensor units were stored in cool dark place.
Neutron: For irradiation the sensor units by neutrons the sensor unit was put on adjusted table, the irradiation source was fixed at a distance of 1 m to the sensor unit and underwent irradiation from Pu(Be) neutron source for research purpose. 3 different channels were used; the doses were 1.31 Sv; 2.7 Sv; 4.85 Sv (equivalent doses). Energy was 14.1 MeV. After irradiation session sensor units were stored in cool dark place.
Iridium 192 isotope for HDR brachytherapy: For irradiation the sensor units by Iridium 192 the sensor units were put to phantom shaped cube imitating human organ. Before irradiation tube sensor units were places in standard brachytherapy Titanium needles (18-gauge needle). Tube sensor units were put in 1 cm distance from one another starting from the centre of the cube to ensure dose gradient measurement. In the centre of the cube phantom Ir 192 source were placed using standard needle. Distances from radiation source were: 1, 2, 3, 4, cm. Planned dose in the centre of cube phantom was 5 Gy, 10 Gy, 50 Gy for separate experiments. The sensor unit measured doses in 1 cm, 2 cm, 3cm, 4cm distances from the radiation sources when irradiation dose was 5 Gy, were as follows: 1 cm - 5Gy, 2 cm - 2,2 Gy, 3 cm - 1,3 Gy, 4 cm - 0,8 Gy. After irradiation session sensor units were stored in cool dark place.

### Sensitivity of exemplary polymer gels to radiation

3 polymer hydrogel compositions were prepared (Table 1).

**Table 1**

| Components | Final concentration of components in the composition | | |
|---|---|---|---|
| | 1 | 2 | 3 |
| Distilled deionized water - CAS 7732-18-5 | 86% (w/w) | 86% (w/w) | 86% (w/w) |
| Gelatin - bloom 300 A (Sigma Aldrich), CAS 9000-70-8 | 8% (w/w) | 4% (w/w) | 8% (w/w) |
| Methacrylic acid (MAA) (Sigma Aldrich) CAS 79-41-4 | 6% (w/w) | 8% (w/w) | 6% (w/w) |
| Tetrakis (Sigma Aldrich) CAS 124-64-1 (THPC) | 150 mM | 15 mM | 10 mM |

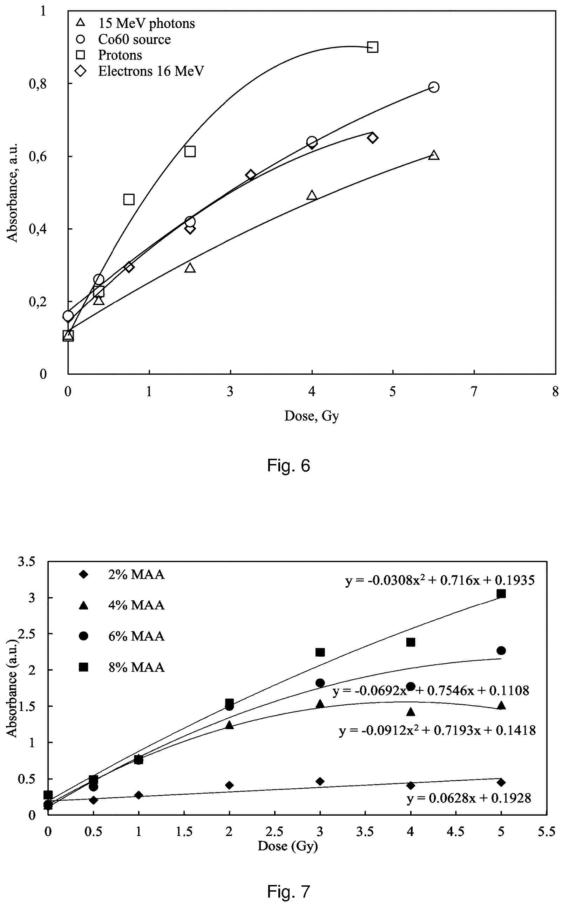

All three of above polymer hydrogel compositions were evaluated for 15 MeV photons, ⁶⁰Co, Protons and 16 MeV electrons medical radiation. Doses tested: 0.5 Gy, 1 Gy, 2 Gy, 3 Gy, 4 Gy, 5 Gy, 6 Gy. The polymer hydrogel compositions were evaluated/scanned using UV-VIS spectroscopy, evaluating transmittance of material for UV-VIS light after irradiation. The exemplary results of composition 1 are presented in Figure 6. The steeper the curve is the better sensitivity to radiation in presented. According to the results provided in Fig.6, nMAG gel evaluated at wavelength *λₘₐₓ* = 650 nm was mostly sensitive for proton irradiation. The slope was the steadiest, 0.34, for protons comparing to 0.08 for 15 MeV photons, 0.10 for 16 MeV electrons and 0.14 for ⁶⁰Co source. The steeper the slope, the more sensitive the gel is to irradiation. To summarize, the compositions of the polymer hydrogel filling are sensitive to ionizing radiation used in medicine and especially for cancer treatment in common radiotherapy facility in Europe, South and North Americas, Australia, Asia, Japan and other countries. High spatial resolution and high sensitivity to low dose and low dose rate irradiation were achieved, no angular dependence was observed.

### Variations of methacrylic acid concentrations

Methacrylic acid concentrations used in experiment were calculated and added to solution keeping the concentrations of other gel components as it was indicated for a standard gel. Analyzing dose dependent UV-VIS absorption spectra of irradiated gels at 650 nm wavelength absorbance vs dose curves were constructed (Fig. 7) from which gel sensitivity parameter to irradiation was derived drawing tangential to the fitted curve. It was observed that in the radiation dose range of 0.5 Gy to 2 Gy for all of the tested concentrations, the polymerization degree was linearly dependent the radiation dose. These were considered to be good results, as such radiation dose ranges are used most frequently in brachytherapy. No polymerization saturation was observed for the gels containing 8 % w/w of methacrylic acid. The dose sensitivity was found to be 0.55 for gel containing 8 % w/w of methacrylic acid. The polymerization process was slowed down at 3 Gy dose and is faster at higher doses (4 Gy - 5 Gy) to form larger polymerized gel clusters. However, polymerization proceeds in smaller extent as compared to gels with higher concentrations of methacrylic acid.

### Variations of the oxygen scavenger amount

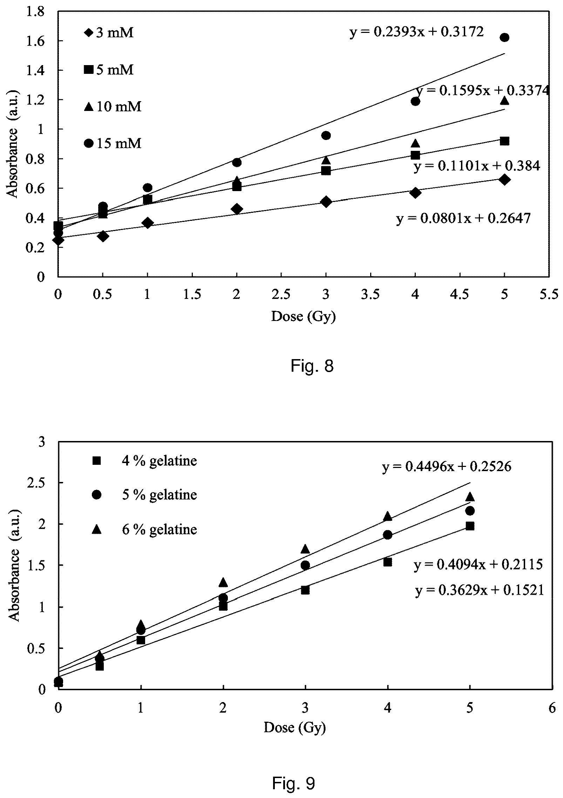

Further development of advanced gel was focused on the adjustment of oxygen scavenger, Tetrakis(hydroxymethyl) phosphonium chloride (THPC), amount. Since oxygen scavenger plays an important role in polymerization process of hydrogels preventing termination of developed polymeric chains due to interaction with reactive radicals in water, it is assumed that a larger amount of oxygen scavenger (100-150Mm) in gel may contribute to the enhancement of dose gel sensitivity to irradiation dose/time. Also, the higher concentration of oxygen scavenger prevents the expansion of oxygen infused zone, which is important when high dose gradients are present in irradiated gel. On the other hand, a smaller amount of oxygen scavenger contributes to the reduction of the saturation dose which is important evaluating dynamics of polymerization processes. Accordingly, 3mM, 5mM, 10mM and 15mM concentrations of THPC were selected for investigation, the rest of the components were as in the standard gel. Performed analysis of UV-VIS spectra of irradiated gels revealed that the gels containing 10 mM and 15 mM THPC, were absorbing light better than others (Fig. 8). However, more uniform tendency of radiation induced changes was observed at THPC concentrations of 5 mM and 10mM. Applying linear regression method R² values of 0.9895 and 0.9509 were estimated for 10 mM and 5 mM of THPC in nMAG gels respectively with corresponding tangential values of 0.16 (16%) and 0.11 (11 %). For 15 mM and 3 mM of THPC these values were 0.23 (23%) and 0.08 (8%)

### Variation of gelatin concentration

It is known that the increased concentration of the gelatin in gel may lead to the reduction of gel sensitivity to irradiation. Irradiated to higher doses gelatin starts interacting with methacrylic acid and forms polymer derivatives, complicating the evaluation of dose gels. Also, the polymerization level of dose gel will be reduced due to additional consumption of methacrylic acid monomers in reactions with gelatin. Too low amount of gelatin in dose gel will result in loss of its function as a scaffold for hosting polymer derivatives. Lower than standard (8% (w/w) concentrations of gelatin (4%, 5% and 6% (w/w)) were investigated in order to alter gels sensitivity (other component concentrations were as in the standard gel). Dose dependent UV-VIS absorbance values of the irradiated dose gels containing various gelatin concentrations are provided in Fig. 9. As can be seen, all of the tested gelatin concentrations were suitable for the required gel sensitivity.

### Features of scanner created to retrieve data from tube shape sensor unit

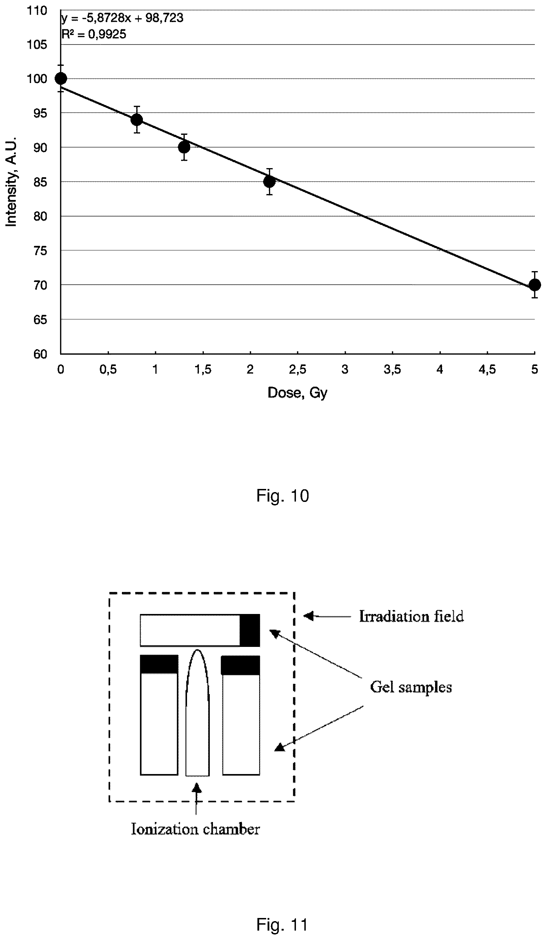

Calibration curve was created after sensor unit irradiation by most common radiation doses. Several sets of tube-shaped sensor units were prepared and irradiated. The scanner has scanned it alongside the whole length of the sensor units and provided the number of counts detected for each dose. When sensor unit containing polymer hydrogel is irradiated it becomes less transparent and less counts are collected, as less intensity of light go through the gel. The scanner response dependence to ionising radiation doses from 0 Gy to 5 Gy is provided at figure 10. While the optical scanner is measuring changes in optical density, a decrease in measured intensity of the UV-VIS light is observed when the dose is increasing. The intensity values is shown as normalised arbitrary units (marked throughout the description as "arb. units", "AU" or "A.U."). When gel is not irradiated (0 Gy) it's 100 A.U. of intensity. Values measured after 0.5, 1, 2, 5 Gy irradiation is decreasing because of higher optical density of the gel after irradiation caused polymerisation. The steadier the slope of intensity drop is, the more sensitive to doses the gel is.

Standard deviations that were calculated for every measured dose at every scanning step. Samples irradiated with <5Gy doses were measured in a higher precision, 0.1 Gy accuracy, 0.1 mm spatial resolution. It was found that calibration curve possessed good linearity between irradiation dose and transmitted light intensity (R² = 0.992). The scanning step of optical scanner is 0.1mm.

### Measurements with the rectangular shape of sensor unit

### Polymer hydrogel experiments and scanner testing

**Table 2. The chemical constituents of the investigated polymer gels to fill rectangular shape of sensor unit**

| | nACC | nMAG | nVIPE |
|---|---|---|---|
| Water | 80-95% | 80-95% | 70-95% |
| *Highly purified distilled (HPLC grade, Sigma-Aldrich)* | | | |
| Gelatin | 2-5% | 2-8% | 2-7% |
| *From porcine skin (300 bloom, Sigma-Aldrich)* | | | |
| Monomers | 1-5% | 1-5% | 1-5% |
| *Acrylamide (AAM, Sigma-Aldrich); Methacrylic acid (MAA, Sigma-Aldrich); N-vinylpyrrolidone, (VIPE, Sigma-Aldrich)* | | | |
| Cross-linker | 1-5% | | 1-5% |
| *N,N-methylene-bis-acrylamide (BIS, Sigma-Aldrich)* | | | |
| Oxygen scavenger | 10-150 mM | 2-150 mM | 10-150 mM |
| *Hydroxymethyl phosphonium chloride (THPC, Sigma-Aldrich)* | | | |

In order to highlight the irradiation procedure, the schematic outline is presented below showing the photon and particles irradiation sources and beam energies.

**Table 3**

| Polymer gel investigation | | | | |
|---|---|---|---|---|
| Photon irradiation | | Particle irradiation | | |
| Linear medical accelerator | ⁶⁰Co source | Proton | Electron | Neutron |
| 15 MeV | 1.25 MeV | 230 MeV | 6 MeV | 14 MeV |
| | | | 16 MeV | |

The acrylamide (nACC), methacrylic acid (nMAG) and N-vinylpyrrolidone (nVIPE) based polymer gels were prepared by standard formulation as described in previous section. Three batches of gels were prepared and marked as m for nMAG, p nACC and v for nVIPE dose gel.

For the irradiation experiment 110mm length, 110 mm width sensor unit was made. The frame of the plate/square sensor unit is made of PLA. The thickness of sensor units frame is 10 mm and could vary from 1 mm to 50mm. The inside part is transparent. It's width was 100 mm. The frame contains 2 hole to fill the polymer gel inside. Holes are sealed after the gel is poured inside the cavity. After the filling the gel holes are sealed by liquid plastic. The plate/square sensor unit is hermetic.

### Photon irradiation of experimental gels:

In order to investigate dose gel sensitivity to photons, experimental gel samples were irradiated using X-ray beam of medical linear accelerator and gamma rays of medical teletherapy unit with ⁶⁰Co source.

Medical linear accelerator. Gels samples were irradiated to 2, 4, 6, 8 and 10 Gy doses to investigate properties of the polymerized gels in the low dose region. The step of 2 Gy was set following the standard fractionating practice used in radiotherapy (Bartelink et al., 2001, Wu et al., 2014).

The irradiation of gel samples was performed in medical linear accelerator Clinac DMX (Varian) at Oncology hospital of Lithuanian University of Health Sciences. Following irradiation parameters were used: max dose depth was 1.5 cm, source to surface distance, SSD, was set to 100 cm, field size 10×10 cm2, dose rate - 3 Gy/min. 1 monitor unit (MU) of the Linac corresponded to 0.01 Gy on average, however, using calibrated ionization chamber the value of MU in terms of Gy was adjusted for each treatment procedure separately. The schematic outline of samples in rectangular sensor units prepared for irradiation is presented in Fig. 11.

Medical teletherapy unit with ⁶⁰Co. Series of samples of nMAG, nACC and nVIPE dose gels were prepared and irradiated in medical teletherapy unit ROKUS M with ⁶⁰Co source to doses: 0.5, 2, 4, 6, 8, 10 Gy. The average energy of 1.25 MeV of gamma photons was assumed, taking into account that ⁶⁰Co has two strong gamma lines at 1.17 MeV and at 1.33 MeV. The actual ⁶⁰Co source activity and corresponding dose rate was calculated for the exact day of treatment. Also the irradiation time was calculated for each treatment separately in order to deliver precise doses to the samples. Source to surface distance (SSD) was set to 75 cm, irradiation field size was 20×20 cm and build up layer was 0.5 cm. In order to minimize possible errors three samples representing three different types of gels were irradiated to the same dose at once.

Particle irradiation of experimental gels. nMAG, nACC and nVIPE polymer gel samples were irradiated by high energy protons and neutrons in order to assess the impact of high energy particles on polymerization processes in dose gels and to investigate radiation induced changes of polymerized gel properties. Methacrylic acid based gel samples were irradiated by high energy electrons additionally.

### Proton irradiation

Experimental samples were irradiated in proton accelerator IBA PROTEOS C230 (lon Beam Applications S.A) to doses from the interval 0.5 - 5.0 Gy at OncoRay Clinic in Dresden. 230 MeV proton irradiation was performed 24 hours after gels' preparation using standard snout 180, with the aperture diameter of 16.3 cm. Proton irradiation geometry was implemented by keeping gantry and treatment table orientations at 0o position. Farmer chamber PTW30013 with build-up cap was fixed in a central position of the irradiation field, which was formed applying snout of 15.00 cm. Ionization chamber was used as the reference dosimeter. Dose correction factor k0=1.022 was calculated for this chamber taking into account atmospheric conditions: p=1002.1 hPa and T=23.1°C. During the irradiation of gel samples three rectangular sensor units from different batches containing different gels were positioned on the treatment table in the way which it was described above. Arranged rectangular sensor units were surrounded by 1.50 cm thick polymethyl methacrylate (PMMA) blocks and covered by the additional 10.30 cm thick PMMA block (corresponds to the thickness of 11.19 cm in water) in order to secure 10.0 cm width of modulated SOBP with a total proton beam penetration depth of 17.0 cm. Performed experimental measurements showed no or only very small deviations between the absorbed doses values provided by the proton accelerator system and measured by Farmer chamber. The highest measured dose deviation was 0.005 Gy observed for 5 Gy absorbed dose.

### Neutron irradiation

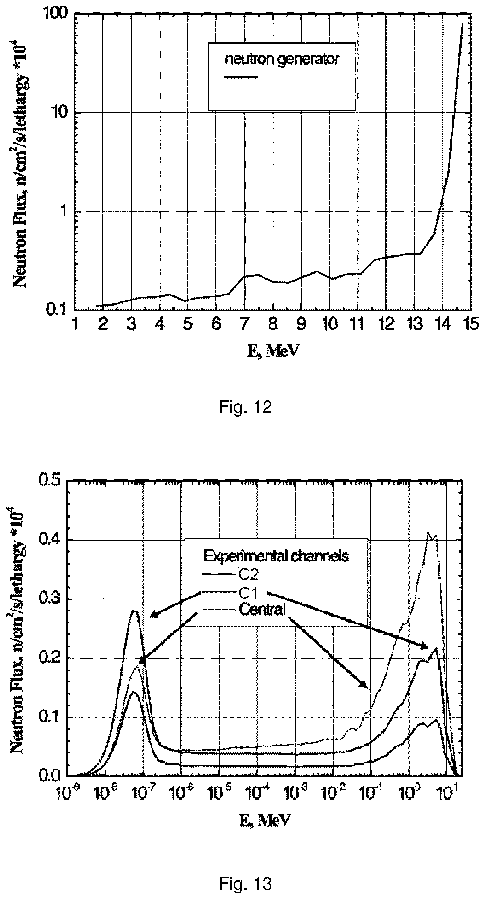

There are some specific dose gels that are used for dosimetry in neutron therapy (Kawamura et al., 2015), however, the goal of this investigation was to assess the suitability of common dose gels (nACC, nMAG and nVIPE) to be used in neutron therapy. Due to the limited access possibilities neutron irradiation of samples was performed just with the aim to indicate the difference between the optical properties of irradiated dose gels treated by neutrons and other particles. Neutron irradiation of gels was carried out at Center for Physical Sciences and Technology (FTMC) in Vilnius. Two types of neutron sources were used: a) neutron generator exploring fission reaction: D + T → n + 4He, max. energy of neutrons - 14.1 MeV, neutron flux was108 n/s; dose rate - 1.08 Gy/h; neutron irradiation dose (equivalent dose) of gel samples - 0.3 Sv (see Fig. 12); and b) Pu(Be) neutron source, producing broad spectra of thermal, epithermal and fast electrons in 3 different channels. Neutron energy distribution in each channel is shown in Fig. 13 and the corresponding parameters are provided in the Table 2.

**Table 4. The neutron related parameters in experimental channels of Pu(Be) unit**

| Parameter | C2 channel | C1 channel | Central channel |
|---|---|---|---|
| Thermal neutrons | 45% | 40% | 19% |
| Epitherm neutrons | 25% | 26% | 28% |
| Fast neutrons | 30% | 34% | 53% |
| Flux, n/s | 3.15E+04 | 6.76E+04 | 9.02E+04 |
| Dose, mSv/h | 17 | 37 | 40 |

Gel samples were placed in the C1 channel and irradiated with neutrons to 1.31 Sv; 2.7 Sv; 4.85 Sv doses (equivalent doses).

### Electron irradiation

Two series of nMAG dose gel samples were irradiated with 6 MeV and 16 MeV energy electrons in medical linear accelerator Varian Clinac 2100C/D at the Hospital of Lithuanian University of Health Sciences Kaunas Clinics. The experiment was performed with the aim to assess the impact of electron energy on the properties of the irradiated methacrylic acid-based dose gels. Source to surface distance, SSD, of 100 cm was set in all irradiation procedures. The irradiation field size was 6×6 cm2. Also 2.5 cm thick build up layer was used to focus electron beam at the exact volume of the cuvette. The electron irradiation dose rate was 3 Gy/min. Monitor units (MU) of the linac were calculated in the same way as it was done in the case of photon irradiation: 1 MU =0.01 Gy.

Experimental samples were irradiated to doses from the interval of 0.5 - 5.0 Gy. Some of samples were irradiated to 5 Gy applying dose fractioning strategy and splitting the whole dose in two fractions of 2.5 Gy each. Time interval between two fractions was -12 hours.

### Rectangular sensor unit calibration curve and measurement accuracy

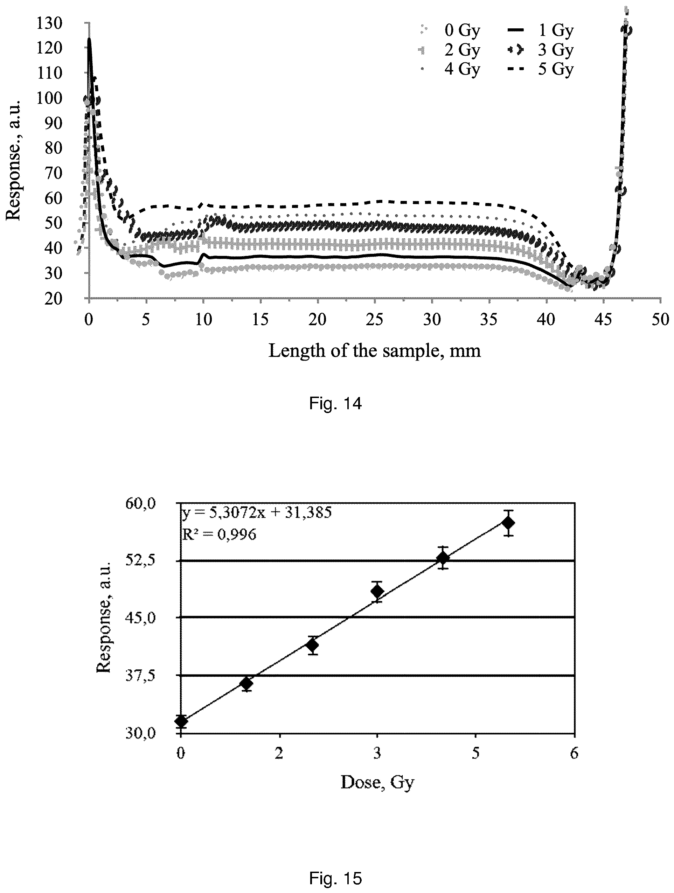

In order to obtain dose calibration curve of the scanner the intensity measurements of dose gels irradiated to different doses from the interval between 0 and 5 Gy have been performed. Corresponding intensity profiles are provided in Fig. 14. The data obtained within the measurement window (12-36 mm) were used for the construction of calibration curve, which is presented in Fig. 15 together with indicated standard deviations that were calculated for every measured dose at every scanning step. It does not exceed 10% for dose range from 1 Gy to 5 Gy. It was found that calibration curve possessed good linearity between irradiation dose and transmitted light intensity (R² = 0.996).

### Irradiation method of external beam:

In order to achieve homogeneous irradiation of the whole gel volume tubes were placed on their long side in the central position of the irradiation field. The 10 x10 cm2 field size was chosen in linear accelerator. 15 MeV photon beam was applied for irradiation and the doses from the interval 0-5 Gy were delivered.

Properties of the irradiated samples were analyzed in UV-VIS spectrometer and photo scanner developed in laboratory. The standard error of UV-VIS spectra absorbance measurements does not exceed 5%. The standard error for constructed photo-scanner varies from 0.55% to 1.67% when irradiation doses in increasing.

### Irradiation method for HDR brachytherapy (high dose rate):

The tube and circular cross-section shape sensor units were irradiated by 192Ir source. Sensor units were placed 1 cm, 2 cm, 3 cm, 4 cm away from radiation source to measure the doses. 5 Gy dose were applied at 1 cm distance, as well 2.2 Gy, 1.3 Gy and 0.8 Gy applied at 2 cm, 3 cm, 4 cm accordingly. 192Ir radiation source is natural radionuclide. Its intensity of radiation is decreasing during time and dose decrease because of the distance from source.

Two types of pre-clinical sensor unit tests were done. First, the sensor units were irradiated without any containing applicator, second the sensor units were irradiated in Ti needles used for prostate HDR brachytherapy treatment (Fig. 16). The sensor units will be used with and without applicator or needles. Both settings are needed to show the accuracy of dose measurement, the abilities to measure in different distances from source, proof the good spatial resolution.

### Measurement results during brachytherapy

The main result of the human studies: the sensor unit and reading device system is suitable for measuring radiation doses in healthy and adjacent tissues of prostate cancer patients (the tube form sensor unit was inserted into catheter during brachytherapy). Measurement accuracy 0.1 Gy. Detector scanning accuracy 0.1 mm, standard deviation does not exceed 5% at 2 Gy irradiation, does not exceed 10% at single doses/fractions up to 5 Gy. Dose compliance was compared with the planned doses of the treatment planning system. The gold standard is an ionization chamber, but dose measurement with it is impossible when procedures are performed on the patient. We use it to determine the calibration curve and make dose corrections, but the experiment is without people.

Further aspects of the disclosure are exemplified by the following numbered clauses:
Clause 1. A sensor unit for measuring radiation dose in or near a target region of a biological subject that is irradiated, comprising a hollow tubular body and a polymer hydrogel filling, wherein the polymer hydrogel filling is enclosed in the hollow tubular body.
Clause 2. The sensor unit according to Clause 1, wherein the hollow tubular body is a closed structure, enclosing the polymer hydrogel filling.
Clause 3. The sensor unit according to Clause 1 or 2, wherein the hollow tubular body has a circular cross-section.
Clause 4. The sensor unit according to Clause 2, further comprising end plugs.
Clause 5. The sensor unit according to Clause 3, wherein the end plugs are detectable by ultrasound.
Clause 6. The sensor unit according to Clause 4 or 5, wherein the end plugs are made of a material comprising graphite.
Clause 7. The sensor unit according to any one of Clauses 4 to 6, wherein the length of the end plugs is from 1 mm to 50 mm, preferably 10 mm.
Clause 8. The sensor unit according to any one of Clauses 1 to 7, wherein the length of the sensor unit is from 10 mm to 3000 mm, preferably from 100 mm to 550 mm.
Clause 9. The sensor unit according to any one of Clauses 1 to 8, wherein the outer diameter of the sensor unit is from 0.8 mm to 1.4 mm.
Clause 10. The sensor unit according to any one of Clauses 1 to 9, configured to be used in a brachytherapy catheter or brachytherapy needle.
Clause 11. The sensor unit according to Clause 1 or 2, wherein the hollow tubular body has a rectangular cross section.
Clause 12. The sensor unit according to Clause 11, wherein the hollow body is in a shape of a plate, preferably wherein width of the tubular body greater than thickness of the tubular body.
Clause 13. The sensor unit according to Clause 11 or 12, wherein the hollow body comprises a top wall, a bottom wall, a front wall, a rear wall and two opposite side walls; preferably wherein: a) the length of the hollow tubular body is from 50 mm to 150 mm, preferably 110 mm, b) the width of the hollow tubular body is from 50 mm to 150 mm, preferably 110 mm, and/or c) the cross-section size of the hollow tubular body is from 2.5 mm to 50 mm, preferably from 5 mm to 10 mm.
Clause 14. The sensor unit according to any of preceding Clauses, wherein at least a portion of the hollow tubular body is made of a UV and visible light transparent material.
Clause 15. The sensor unit according to any one of Clause 13 or Clause 14 when dependent on Clause 13, wherein at least a portion of each of the top and the bottom wall is made of a UV and visible light transparent material.
Clause 16. The sensor unit according to Clause 14 or 15, wherein the transparent material is selected from polyethylene, nylon, vinyl, polyurethane, silicone, acrylic, polyvinylchloride, ethylene-vinyl acetate, polypropylene, and a polyethylene/polyvinylchloride combination.
Clause 17. The sensor unit according to Clause 16, wherein the transparent material is polyethylene.
Clause 18. The sensor unit according to any of preceding Clauses, wherein the polymer hydrogel comprises a water-soluble polymerizable compound, a gelating component and water, wherein the polymerizable compound is polymerizable when exposed to radiation; preferably wherein the polymer hydrogel density is from 0.1 to 1.6 g/cm³.
Clause 19. The sensor unit according to Clause 18, wherein the polymerizable compound is selected from methacrylic acid, acrylamide, N-vinylpyrrolidone, methacrylamide, hydroxyethyl methacrylate, N,N-dimethyl(meth)acrylamide, N,N-diethyl(meth)acrylamide, 4-(meth)acryloylmorpholine, and N-vinylacetamide.
Clause 20. The sensor unit according to Clause 19, wherein the polymerizable compound is selected from methacrylic acid, acrylamide, and N-vinylpyrrolidone.
Clause 21. The sensor unit according to Clause 20, wherein the polymerizable compound is methacrylic acid.
Clause 22. The sensor unit according to any one of Clauses 19 to 21, wherein the polymerizable compound is at concentration from 2% to 10% (w/w).
Clause 23. The sensor unit according to Clause 22, wherein the polymerizable compound is at concentration from 6% to 8% (w/w).
Clause 24. The sensor unit according to any one of Clauses 18 to 23, wherein a gelating component is selected from gelatin, agar agar, chitosan, pectin, alginate, starch, cellulose, collagen, hyaluronic acid.
Clause 25. The sensor unit according to Clause 24, wherein a gelating component is gelatin.
Clause 26. The sensor unit according to Clause 24 or 25, wherein a gelating component is at concentration from 2% (w/w) to 10% (w/w).
Clause 27. The sensor unit according to Clause 26, wherein a gelating component is at concentration from 4% to 8% (w/w).
Clause 28. The sensor unit according to any one of Clauses 18 to 27, wherein the polymer hydrogel further comprises an oxygen scavenger compound component.
Clause 29. The sensor unit according to Clause 28, wherein the oxygen scavenger compound is selected from Tetrakis(hydroxymethyl)phosphonium chloride (THPS), Poly(hydroquinone) (PHQ), hydroquinone (HQ).
Clause 30. The sensor unit according to Clause 29, wherein the oxygen scavenger compound is Tetrakis(hydroxymethyl)phosphonium chloride (THPS).
Clause 31. The sensor unit according to Clause 29 or 30, wherein the oxygen scavenger compound is provided at concentration from 2 mM to 150 mM.
Clause 32. A polymer hydrogel suitable for radiation dosimetry, comprising:
   a) a water-soluble polymerizable compound selected from methacrylic acid, acrylamide, and N-vinylpyrrolidone,
   b) a gelating component selected from gelatin, agar agar, chitosan, pectin, alginate, starch, cellulose, collagen, hyaluronic acid, and
   c) water,
   wherein the polymerizable compound is polymerizable when exposed to radiation; preferably wherein the polymer hydrogel density is from 0.1 to 1.6 g/cm³.
Clause 33. The polymer hydrogel according to Clause 32, wherein the water-soluble polymerizable compound is methacrylic acid.
Clause 34. The polymer hydrogel according to Clause 33, wherein the methacrylic acid is provided at concentration from 2% to 10% (w/w), preferably from 6% to 8% (w/w), more preferably at concentration of 6% or 8% (w/w).
Clause 35. The polymer hydrogel according to any one of Clauses 32 to 34, wherein the gelating component is gelatin.
Clause 36. The polymer hydrogel according to Clause 35, wherein gelatin is provided at concentration from 2% (w/w) to 10% (w/w), preferably from 4% to 8% (w/w), more preferably at concentration of 4% or 8% (w/w).
Clause 37. The polymer hydrogel according to any one of Clauses 32 to 36, wherein the polymer hydrogel further comprises an oxygen scavenger compound component.
Clause 38. The polymer hydrogel according to Clause 37, wherein the oxygen scavenger compound is selected from Tetrakis(hydroxymethyl)phosphonium chloride (THPS), Poly(hydroquinone) (PHQ), hydroquinone (HQ).
Clause 39. The polymer hydrogel according to Clause 38, wherein the oxygen scavenger compound is Tetrakis(hydroxymethyl)phosphonium chloride (THPS).
Clause 40. The polymer hydrogel according to Clause 38 or 39, wherein the oxygen scavenger compound is provided at concentration from 2 mM to 150 mM, preferably at concentration from 20 mM to 150 mM, more preferably from 100 mM to 150 mM.
Clause 41. The sensor unit according to any one of Clauses 1 to 17, wherein the sensor unit comprises the polymer hydrogel according to any one of Clauses 32 to 40.
Clause 42. Use of the sensor unit according to any one of Clauses 1-31 and 41 for measuring a radiation dose.
Clause 43. A reading device configured for scanning the sensor unit according to any one of Clauses 1-31 and 41.
Clause 44. The reading device according to Clause 43, wherein the device comprises a casing comprising 1) a scanning chamber for receiving the sensor unit, 2) a detector configured to detect the optical density of the sensor unit in the scanning chamber, and 3) an optical system comprising a light source, wherein the optical system is configured to provide the light to the detector.
Clause 45. The reading device according to Clause 44, wherein the detector and the optical system are configured to move together along the length of the sensor unit when sensor unit is inserted in the scanning chamber.
Clause 46. The reading device according to Clause 44 or 45, further comprising a controller configured to control the sensor unit reading process and, optionally, to transmit the received data to an interpretation program.
Clause 47. A system, comprising the sensor unit according to any one of Clauses 1-31 and 41, and the reading device according to any one of Clauses 43 to 46 configured for scanning the sensor unit.
Clause 48. The system according to Clause 47, further comprising an information output device configured to visualize the reading device's data.
Clause 49. A method for measuring a radiation dose comprising positioning the sensor unit according to any one of Clauses 1-31 and 41, at a distance of 0.01 cm to 3 cm from a target to be irradiated, performing irradiation by providing a radiation source, detecting optical density of the sensor unit after irradiation, and calculating the radiation dose. Clause 50. The method according to Clause 49, wherein the distance from the target to be irradiated is from 1 cm to 1.5 cm.

Throughout the description, where a concentration of a component is provided as percent concentration are indicated as "%" or as "% (w/w)", it is to be understood that % (w/w) percentage is intended.

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

### Reference list

1. Wolodzko, J.G., Marsden, C., Appleby, A., . CCD imaging for optical tomography of gel radiation dosimeters. Med. Phys. (1999). 26, 2508-2513.
2. Bosi S, Naseri P, Puran A, Davis J, Baldock C. Initial investigation of a novel light-scattering gel phantom for evaluation of optical-CT scanners for radiotherapy gel dosimetry. Phys. Med. Biol. (2007). 52:2893-2903. doi: 10.1088/0031-9155/52/10/017.
3. Bosi SG, Brown S, Sarabipour S, De Deene Y, Baldock C. Modelling optical scattering artefacts for varying pathlength in a gel dosimeter phantom. Phys. Med. Biol. (2009a). 54:275-283. doi: 10.1088/0031-9155/54/2/007.
4. Bosi S, Naseri P, Baldock C. Light-scattering-induced artifacts in a complex polymer gel dosimetry phantom. Appl. Opt. (2009b). 48:2427-2434. doi: 10.1364/ao.48.002427.
5. Doran, S.M. & Dongen, H.P.A. & Dinges, David. Doran SM, Van Dongen HP, Dinges DF: Sustained attention performance during sleep deprivation: Evidence of state instability. Arch Ital Biol (2001). 139: 253-67. Archives italiennes de biologie. 139. 253-67.
6. Y Xu and Cheng-Shie Wuu. Optical computed tomography utilizing a rotating mirror and Fresnel lenses: Operating principles and preliminary results. Physics in medicine and biology. (2023). 58. 479-495. 10.1088/0031-9155/58/3/479.
7. Chang, Yuan-jen & Lin, Jing-Quan & Hsieh, Bor-Tsung & Yao, Chun-Hsu & Chen, Chin-Hsing. Dose evaluation of an NIPAM polymer gel dosimeter using gamma index. Radiation Physics and Chemistry. (2014)104. 10.1016/j.radphyschem.2013.11.031.
8. Oldham, Mark. 3D dosimetry by optical-CT scanning. Journal of physics. Conference series (2006). 56. 58-71. 10.1088/1742-6596/56/1/006.
9. Thomas A, Pierquet M, Jordan K, Oldham M. A method to correct for spectral artifacts in optical-CT dosimetry. Phys Med Biol. (2011) Jun 7;56(11):3403-16. doi: 10.1088/0031-9155/56/11/014. Epub 2011 May 13. PMID: 21572184; PMCID: PMC3227693.
10. Al-Nowais, S & Doran, Simon & Kacperek, Andrzej & Krstajic, N & Adamovics, John & Bradley, D. A preliminary analysis of LET effects in the dosimetry of proton beams using PRESAGE (TM) and optical CT. Applied radiation and isotopes : including data, instrumentation and methods for use in agriculture, industry and medicine (2008). 67. 415-8. 10.1016/j.apradiso.2008.06.032.
11. Steven Babic and L John Schreiner. Phys. Med. Biol (2006.) 51 4171. DOI 10.1088/0031-9155/51/17/004.

## Claims

1. A sensor unit for measuring radiation dose in or near a target region of a biological subject that is irradiated, comprising a hollow tubular body and a polymer hydrogel filling, wherein the polymer hydrogel filling is enclosed in the hollow tubular body.

2. The sensor unit according to claim 1, wherein the hollow tubular body has a circular cross-section.

3. The sensor unit according to claim 2, further comprising end plugs, optionally wherein the end plugs are detectable by ultrasound.

4. The sensor unit according to any one of claims 1 to 3, wherein a) the length of the sensor unit is from 10 mm to 3000 mm, preferably from 100 mm to 550 mm, and/or b) the outer diameter of the sensor unit is from 0.8 mm to 1.4 mm.

5. The sensor unit according to claim 1 or 2, wherein the hollow tubular body has a rectangular cross section.

6. The sensor unit according to claim 5, wherein the hollow body is in a shape of a plate, wherein the hollow body comprises a top wall, a bottom wall, a front wall, a rear wall and two opposite side walls; preferably wherein: a) the length of the hollow tubular body is from 50 mm to 150 mm, preferably 110 mm, b) the width of the hollow tubular body is from 50 mm to 150 mm, preferably 110 mm, and/or c) the cross-section size of the hollow tubular body is from 2.5 mm to 50 mm, preferably from 5 mm to 10 mm.

7. The sensor unit according to any of preceding claims, wherein at least a portion of the hollow tubular body is made of a UV and visible light transparent material, preferably wherein the transparent material is selected from polyethylene, nylon, vinyl, polyurethane, silicone, acrylic, polyvinylchloride, ethylene-vinyl acetate, polypropylene, and a polyethylene/polyvinylchloride combination, more preferably wherein the transparent material is polyethylene.

8. A polymer hydrogel suitable for radiation dosimetry, comprising:
a) a water-soluble polymerizable compound selected from methacrylic acid, acrylamide, and N-vinylpyrrolidone,
b) a gelating component selected from gelatin, agar agar, chitosan, pectin, alginate, starch, cellulose, collagen, hyaluronic acid, and
c) water,
wherein the polymerizable compound is polymerizable when exposed to radiation, preferably wherein the polymer hydrogel density is from 0.1 to 1.6 g/cm³.

9. The polymer hydrogel according to claim 8, wherein a) the water-soluble polymerizable compound is methacrylic acid, preferably provided at concentration from 2% to 10% (w/w), and/or b) the gelating component is gelatin, preferably provided at concentration from 2% (w/w) to 10% (w/w).w).

10. The polymer hydrogel according to claim 8 or 9, wherein the polymer hydrogel further comprises an oxygen scavenger compound component, preferably wherein the oxygen scavenger compound is selected from Tetrakis(hydroxymethyl)phosphonium chloride (THPS), Poly(hydroquinone) (PHQ), hydroquinone (HQ), optionally, wherein the oxygen scavenger compound is provided at concentration from 2 mM to 150 mM.

11. The sensor unit according to any one of claims 1 to 7, wherein the sensor unit comprises the polymer hydrogel according to any one of claims 8 to 10.

12. Use of the sensor unit according to any one of claims 1-7 and 11 for measuring a radiation dose.

13. A reading device configured for scanning the sensor unit according to any one of claims 1-7 and 11; preferably wherein the reading device comprises a casing comprising 1) a scanning chamber for receiving the sensor unit, 2) a detector configured to detect the optical density of the sensor unit in the scanning chamber, and 3) an optical system comprising a light source, wherein the optical system is configured to provide the light to the detector.

14. A system, comprising the sensor unit according to any one of claims 1-7 and 11, and the reading device according to any one of claims 13 to 14 configured for scanning the sensor unit.

15. A method for measuring a radiation dose comprising positioning the sensor unit according to any one of claims 1-7 and 11, at a distance of 0.01 cm to 3 cm from a target to be irradiated, performing irradiation by providing a radiation source, detecting optical density of the sensor unit after irradiation, and calculating the radiation dose.
